(19) Europäisches Patentamt
European Patent Office
Office européen des brevets

(11) Veröffentlichungsnummer: **0 617 089 A1**

(12) **EUROPÄISCHE PATENTANMELDUNG**

(21) Anmeldenummer: **94103777.2**

(22) Anmeldetag: **11.03.94**

(51) Int. Cl.5: **C09B 62/507**, C09B 62/08, C09B 62/44, C09B 29/08, C09B 67/00, //D06P1/38

(30) Priorität: **24.03.93 DE 4309554**

(43) Veröffentlichungstag der Anmeldung: **28.09.94 Patentblatt 94/39**

(84) Benannte Vertragsstaaten: **CH DE FR GB LI**

(71) Anmelder: **BAYER AG**

**D-51368 Leverkusen (DE)**

(72) Erfinder: **Herd, Karl-Josef, Dr.**
**Am Gartenfeld 66**
**D-51519 Odenthal (DE)**
Erfinder: **Bootz, Konrad, Dr.**
**Amundsenstrasse 8**
**D-58300 Wetter (DE)**
Erfinder: **Bock, Eckhard**
**Kölner Strasse 360**
**D-51515 Kürten (DE)**
Erfinder: **Hoppe, Manfred, Dr.**
**Ammerweg 23**
**D-51515 Kürten (DE)**
Erfinder: **Kunde, Klaus, Dr.**
**Moltkestrasse 5**
**D-54426 Neunkirchen (DE)**
Erfinder: **Reddig, Wolfram, Dr.**
**Walter-Flex-Strasse 22**
**D-51373 Leverkusen (DE)**

(54) **Faserreaktive Azofarbstoffe.**

(57) Die Reaktivfarbstoffe der Struktur (I)

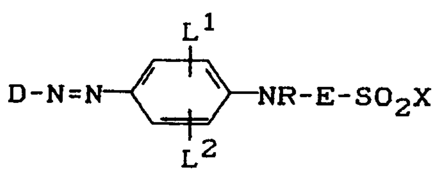

(I)

worin bedeuten

- D Rest einer Diazokomponente,
- X zusammen mit der $SO_2$-Gruppe den Rest einer faserreaktiven Gruppe
- $L^1$ H, $C_1$-$C_4$-Alkyl, $C_1$-$C_4$-Alkoxy, $CO_2H$, NHCO-$C_1$-$C_4$-Alkyl, $NHCONH_2$ oder Halogen,
- $L^2$ H, $SO_3H$, $C_1$-$C_4$-Alkyl oder $C_1$-$C_4$-Alkoxy,
- R H, $C_1$-$C_4$-Alkyl, $CH_2CO_2H$, $CH_2CH_2CO_2H$, $CH_2CH_2SO_3H$, $CH_2CH_2OH$, $CH_2CH_2OSO_3H$ oder -E-$SO_2X$,
- E $-(CH_2-CH_2-O)_i-(CH_2)_r-$, wobei i = 0 oder 1 und r = 2 oder 3,

wobei die Farbstoffe wenigstens eine wasserlöslich machende Gruppe aufweisen, eignen sich zum Färben und Bedrucken von hydroxyl- und amidgruppenhaltigen Materialien.

EP 0 617 089 A1

Die Erfindung betrifft neue faserreaktive Azofarbstoffe, ihre Verwendung zum Färben sowie Zwischenprodukte zur Herstellung der Farbstoffe.

Faserreaktive Azofarbstoffe sind bereits seit langem bekannt, verwiesen wird auf folgende Anmeldungen: DE 3 905 270, EP 407 871, EP 520 241, EP 51 808, DE 3 703 565, EP 364 482 und DE 1 911 427. US-A-3 585 182 beschreibt Triazoloazoverbindungen, die zum Färben von Polyestern geeignet sein sollen.

Der Erfindung lag die Aufgabe zugrunde, neue verbesserte Farbstoffe bereitzustellen.

Die Erfindung betrifft Reaktivfarbstoffe der Struktur (1)

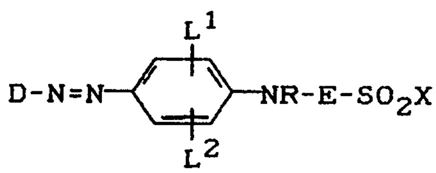

(1)

worin bedeuten

- D Rest einer Diazokomponente
- X zusammen mit der $SO_2$-Gruppe den Rest einer faserreaktiven Gruppe, wobei X insbesondere = $CH_2CH_2$-$S_2O_3H$, $CH_2CH_2OCOCH_3$, $CH_2$-$CH_2$-$OPO_3H_2$, $CH_2CH_2Cl$, $CH_2CH_2OH$ und vor allem $CH=CH_2$, $CH_2CH_2OSO_3H$,
- $L^1$ H, $C_1$-$C_4$-Alkyl, $C_1$-$C_4$-Alkoxy, $CO_2H$, NHCO-$C_1$-$C_4$-Alkyl,$NHCONH_2$ oder Halogen,
- $L^2$ H, $SO_3H$, $C_1$-$C_4$-Alkyl oder $C_1$-$C_4$-Alkoxy,
- R H, $C_1$-$C_4$-Alkyl, $CH_2CO_2H$, $CH_2CH_2CO_2H$, $CH_2CH_2SO_3H$, $CH_2CH_2OH$, $CH_2CH_2OSO_3H$ oder -E-$SO_2X$,
- E $-(CH_2-CH_2-O)_i-(CH_2)_r-$, wobei i = 0 oder 1 und r = 2 oder 3,

wobei der Farbstoff wenigstens eine wasserlöslich machende Gruppe aufweist.

Bevorzugte derartige Gruppen sind Sulfo-, Carboxy- und Sulfatogruppen.

In einer bevorzugten Ausführungsform ist D der Rest einer Diazokomponente aus der Benzol-, Naphthalin- oder Azobenzolreihe, der unsubstituiert ist oder substituiert ist mit bei Reaktivfarbstoffen üblichen Substituenten, insbesondere Sulfo, Carboxy, $C_1$-$C_4$-Alkyl, $C_1$-$C_4$-Alkoxy, Halogen, insbesondere Chlor, Brom oder Fluor oder Nitro. Der Rest D kann auch mit faserreaktiven Gruppen wie Vinylsulfonylgruppen $SO_2X$ oder halogenhaltigen Pyrimidin- oder Triazinderivaten substituiert sein, bevorzugt aber mit $SO_3H$ und $SO_2C_2H_4OSO_3H$.

In einer anderen bevorzugten Ausführungsform entspricht der Rest D der Formel

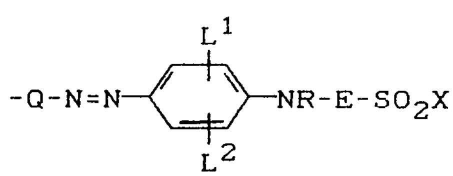

worin $L^1$, $L^2$, R, E und X die oben angegebene Bedeutung haben und

- Q ein bivalenter aromatischer oder heteroaromatischer Rest ist,

insbesondere eine für Disazofarbstoffe typische carbocyclische oder heterocyclische Mittelkomponente wie z.B. ein Rest der Struktur

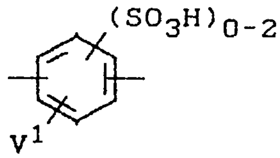 , 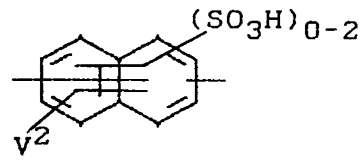 ,

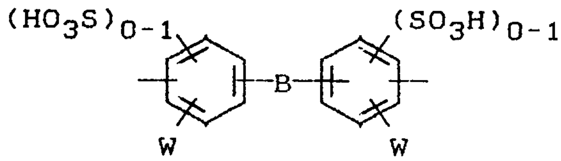 ,

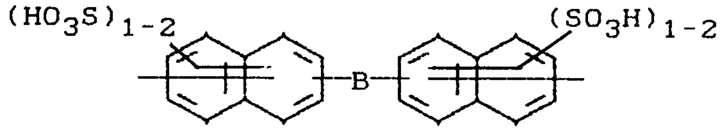

oder 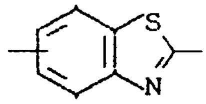 .

mit $V^1$,$V^2$,W = unabhängig voneinander Wasserstoff oder ein für Carbocyclen typischer Substituent, insbesondere $C_1$-$C_4$-Alkyl, $C_1$-$C_4$-Alkoxy, Halogen oder Carboxy,

B = direkte Bindung oder ein Brückenglied, wie z.B. $CH_2$, $CH_2$-$CH_2$, CH = CH, C≡C, O, S, SO, $SO_2$, CO, $CO_2$, $OCH_2CH_2O$, $CH_2$-O-$CH_2$, $CH_2CH_2OCH_2CH_2$, NHCO, NHCONH, $NR^1$, N = N, N = N→O, O←N = N→O, NHCOCONH,

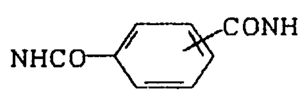 , 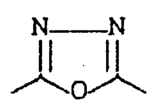 ,

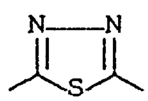 ,

oder ein Triazinylrest der Struktur

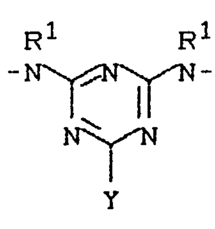

worin

$R^1$ = jeweils unabhängig voneinander H oder $C_1$-$C_4$-Alkyl und

Y = F, Cl, Br, $OR^2$, $SR^2$, $NR^3R^4$,

$R^2$ = H, $C_1$-$C_6$-Alkyl, mit OH, Halogen, $C_1$-$C_4$-Alkoxy, $CO_2H$, $SO_3H$ bzw` $OSO_3H$ substituiertes $C_1$-$C_6$-Alkyl, Cyclohexyl, Furfuryl, Phenyl, mit OH, $CO_2H$, $SO_3H$, $C_1$-$C_4$-Alkyl oder $C_1$-$C_4$-Alkoxy substituiertes Phenyl oder mit OH, $CO_2H$ oder $SO_3H$ substituiertes oder unsubstituiertes Naphthyl,

$R^3$, $R^4$ = unabhängig voneinander Wasserstoff, $C_1$-$C_6$-Alkyl, $C_1$-$C_4$-Alkenyl, mit Halogen, OH, $CO_2H$, $SO_3H$, $OSO_3H$, Methoxy, Ethoxy, $SO_2X$ oder $OCH_2CH_2SO_2X$ substituiertes $C_1$-$C_6$-Alkyl,

Cyclohexyl, Cyclopentyl, Benzyl, Phenyl beziehungsweise Naphthyl oder mit $C_1$-$C_4$-Alkyl, $C_1$-$C_4$-Alkoxy, Halogen, $CO_2H$, $SO_3H$, $SO_2X$ oder $CH_2SO_2X$ substituiertes Phenyl, Benzyl beziehungsweise Naphthyl, wobei $R^3$ und $R^4$ zusammen mit dem N-Atom den Rest eines 5- oder 6-gliedrigen Heterocyclus bilden können, wie z.B.

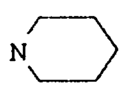 , 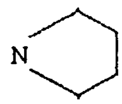 , 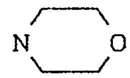 , 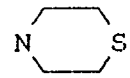 oder

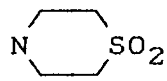 .

Bevorzugt sind Farbstoffe der Struktur (2)

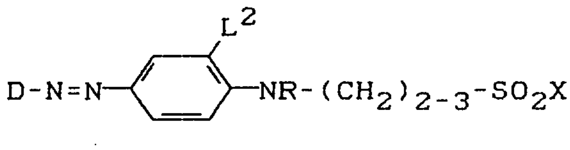

(2)

worin

$L^2$ = H oder $SO_3H$

X = $CH=CH_2$ oder $CH_2CH_2OSO_3H$,

R = H oder $(CH_2)_{2-3}$-$SO_2X$,

und D die oben genannte Bedeutung zukommt.

Besonders bevorzugt sind Farbstoffe der Strukturen (3) bis (13)

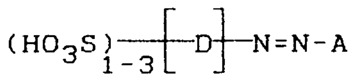

(3)

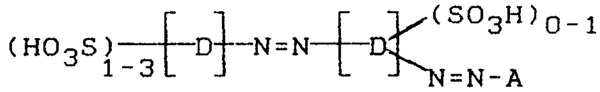

(4)

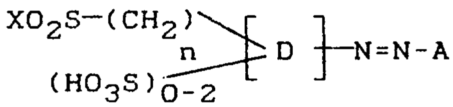

(5)

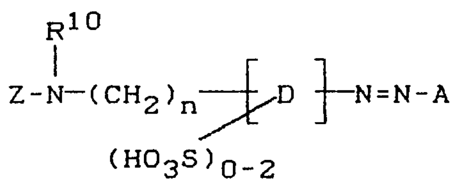

(6)

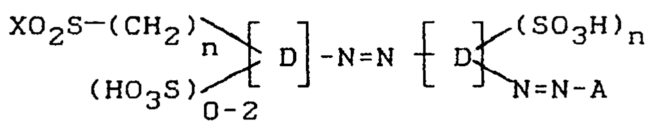

(7)

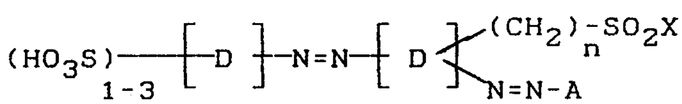

(8)

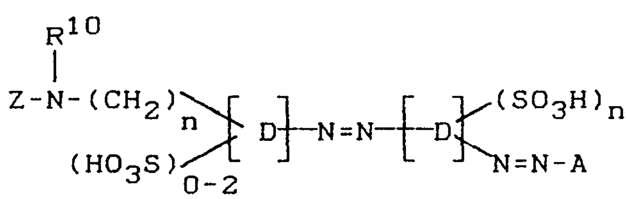

(9)

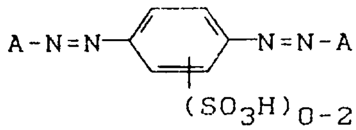

(10)

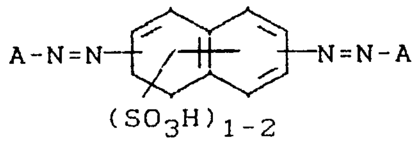

(11)

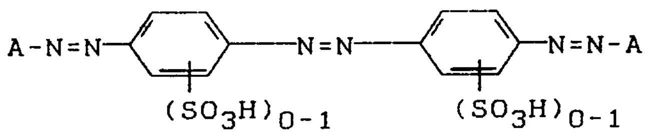

(12)

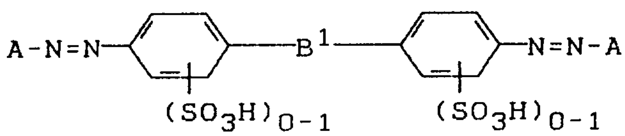

(13)

worin bedeuten

A = 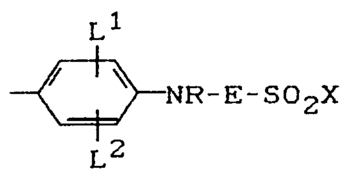

- n 0 oder 1
- $R^{10}$ H oder $C_1$-$C_4$-Alkyl,
- Z faserreaktiver halogenhaltiger Rest aus der Triazin- oder Pyrimidinreihe sowie
- D Phenylen oder Naphthylenrest, der zusätzlich mit Carboxy, Methyl, Ethyl, Methoxy, Ethoxy, Chlor, Brom oder Fluor substituiert sein kann, wobei die Bedeutung für beide Gruppen D in Formel (6), (7) und (8) gleich oder verschieden sein kann, und
- $B^1$ direkte Bindung oder $CH_2CH_2$, CH = CH, CO, $SO_2$, NHCONH oder ein Triazinylrest der Struktur

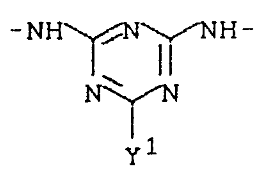

worin $Y^1$ = Cl, F, OH oder $NR^3R^4$,

und R, X, $L^1$, $L^2$, E, $R^3$ und $R^4$ die unter Formel 1) bzw. 2) genannte Bedeutung zukommt.

Der faserreaktive Rest Z steht für solche chlor- oder fluorhaltigen Triazin- bzw. Pyrimidinreste, wie sie z.B. in EP-A 395 951 beschrieben sind, vorzugsweise für einen Monofluor- bzw. Monochlortriazinrest oder einen 5-Chlor-2,6-difluor-4-pyrimidinyl- bzw. einen 5-Chlor-6-fluor-4-pyrimidinyl-Rest.

Ausgewählte Farbstoffe sind solche mit der Struktur (14) bis (33)

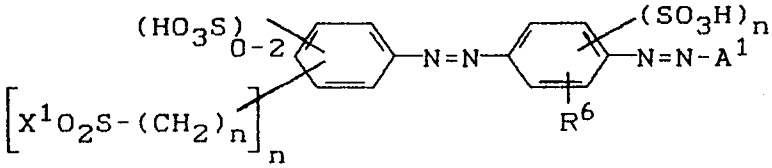

(14)

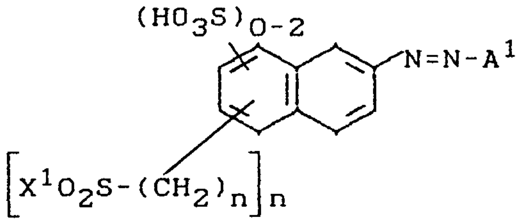

(15)

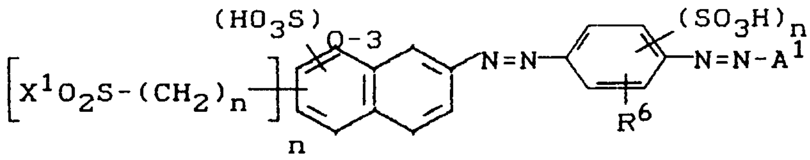

(16)

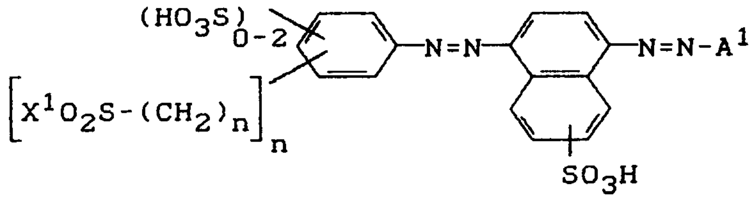

(17)

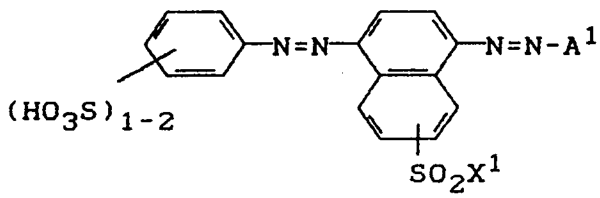

(18)

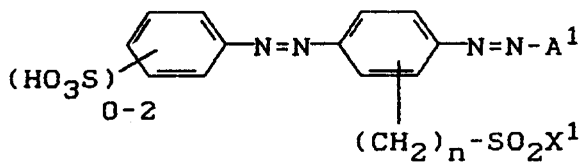

(19)

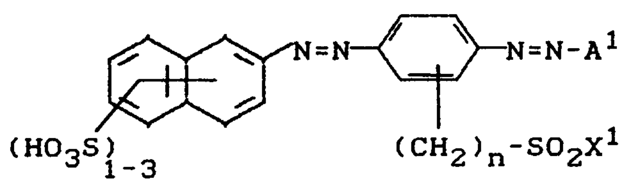

(20)

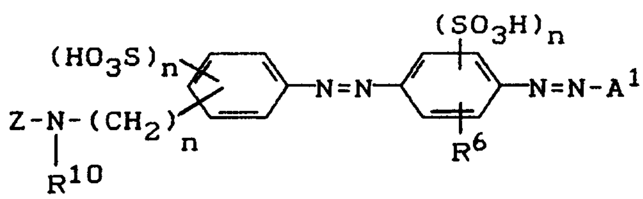

(21)

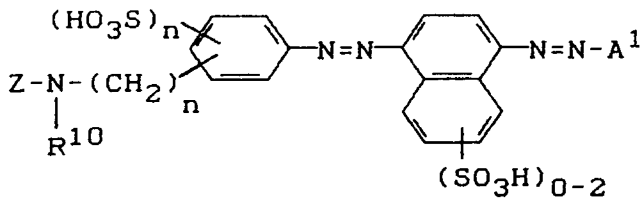

(22)

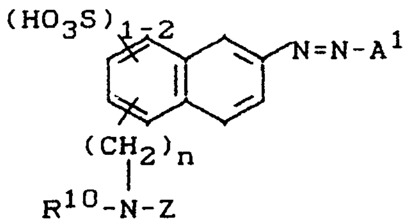

(23)

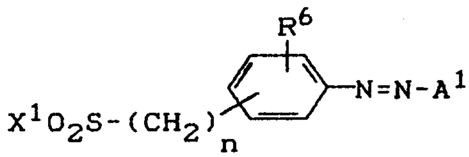

(24)

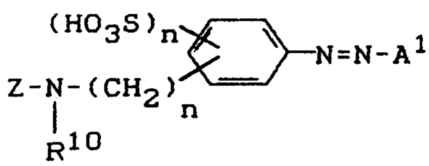

(25)

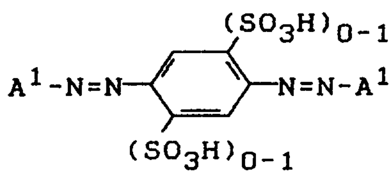

(26)

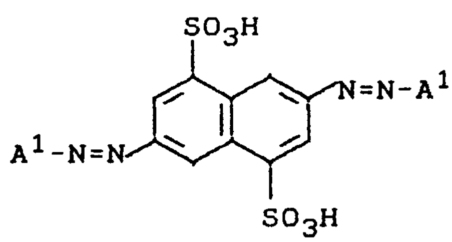

(27)

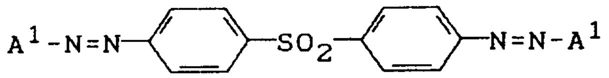

(28)

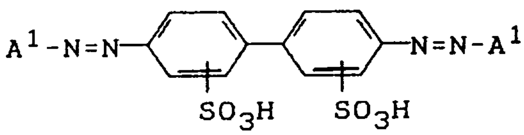

(29)

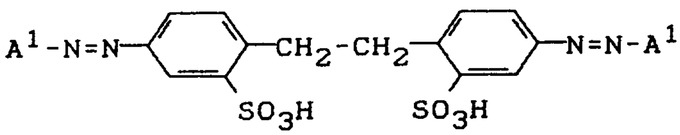

(30)

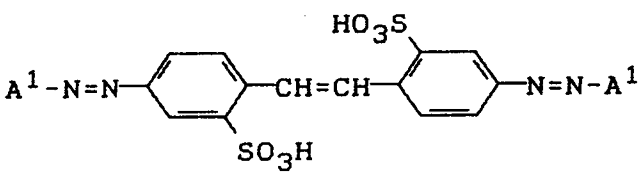

(31)

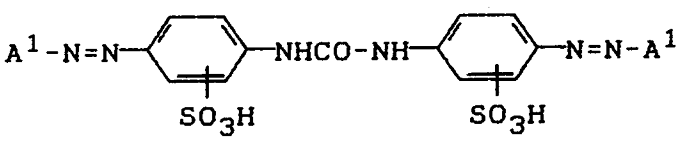

(32)

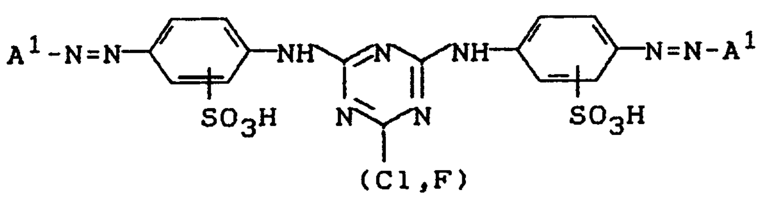

(33)

worin

$A^1$ =

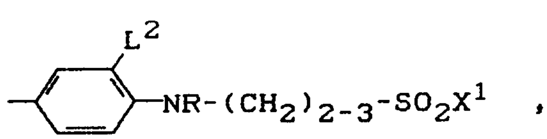

$L^2$ = H oder $SO_3H$

R = H oder $-(CH_2)_{2-3}-SO_2X$

$R^6$ = H, $CH_3$, $OCH_3$, Cl, $SO_2X^1$ oder $CH_2SO_2X^1$

$X^1$ = $-CH=CH_2$ oder $-C_2H_4-OSO_3H$

und Z, n und $R^{10}$ die oben angegebene Bedeutung haben.

Die Herstellung der neuen Farbstoffe kann nach verschiedenen Methoden, die ebenfalls Gegenstand der Erfindung sind, erfolgen:

1. Sulfatierung der nichtfaserreaktiven hydroxyethylgruppenhaltigen Zwischenprodukte der Struktur (34),

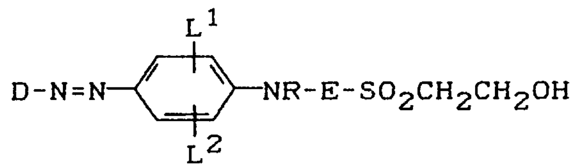 (34)

wobei für $SO_2X$-Reste in D der Substituent X auch die Bedeutung von $CH_2CH_2OH$ haben kann, zu faserreaktiven Farbstoffen der Struktur (1) mit X = $CH_2CH_2OSO_3H$ und gegebenenfalls Überführung dieser Farbstoffe unter schwach alkalischen Bedingungen in solche der Struktur (1) mit X = Vinyl.

Die Zwischenprodukte (34) erhält man durch Diazotieren/Tetrazotieren von Diazokomponenten D-$NH_2$ bzw. Tetrazokomponenten $NH_2$-Q-$NH_2$ und Kuppeln auf Kupplungskomponenten der Struktur (35)

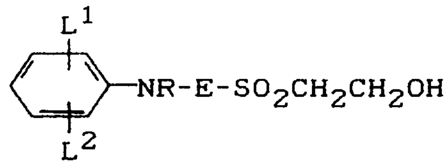 (35)

2. Sulfierung von Farbstoffen der Struktur (1a)

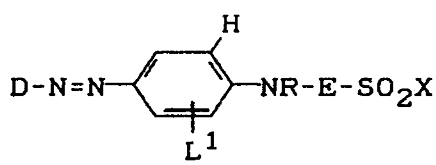 (1a)

bzw. der Struktur (2) mit $L^2$ = H zu neuen Farbstoffen der Struktur (1b)

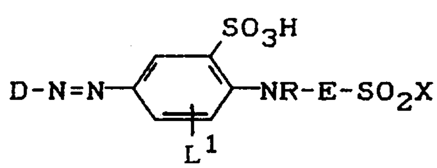 (1b)

bzw. zu Farbstoffen der Struktur (2) mit $L^2$ = $SO_3H$.

3. Sulfierung und Sulfatierung von Zwischenprodukten der Struktur (34a)

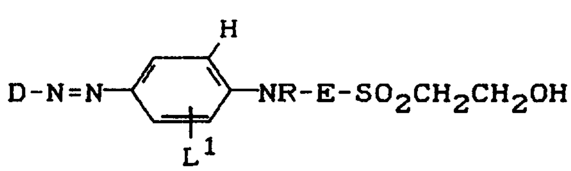 (34a)

wobei für $SO_2X$-Reste in D der Substituent X auch die Bedeutung von $CH_2CH_2OH$ haben kann, zu faserreaktiven Farbstoffen der Struktur (1b) mit X = $CH_2CH_2OSO_3H$ und gegebenenfalls Überführung dieser Farbstoffe unter schwach alkalischen Bedingungen in solche der Struktur (1b) mit X = Vinyl.

4. Diazotieren/Tetrazotieren von Diazokomponenten D-$NH_2$ bzw. Tetrazokomponenten $NH_2$-Q-$NH_2$ und Kuppeln auf Kupplungskomponenten der Struktur (36)

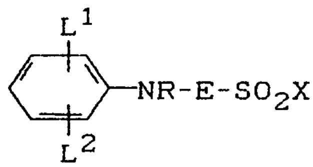

(36)

Zwischenprodukte (36) erhält man durch gezielte Derivatisierung des Hydroxyethyl-Restes in Verbindungen (35) nach bekannten Methoden.

Verbindungen (35) sind durch Substitution von Verbindungen der Struktur (37)

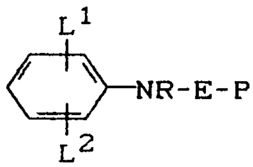

(37)

wobei P = Cl, Br, $OSO_3H$ oder $OCOCH_3$, mit Mercaptoethanol und nachfolgende Oxidation zum Sulfon zugänglich.

Verbindungen (37) sind durch Substitution von entsprechenden Verbindungen mit P = OH zugänglich.

5. Reaktivfarbstoff (1) mit einem zusätzlichen Substituenten Z im Diazorest D, wie z.B. solche der Struktur (6) sind herstellbar, indem man Zwischenprodukte der Struktur (38),

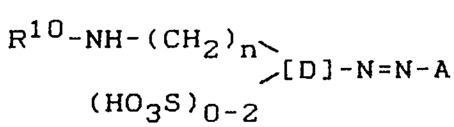

(38)

die wie oben beschrieben herstellbar sind, mit einer heterocyclischen Reaktivkomponente Z-Hal, worin Hal = Cl oder F, in Gegenwart säurebindender Mittel in bekannter Weise kondensiert. Diese Synthesemethode ist auch auf Farbstoffe der Struktur (9) übertragbar.

6. Diazotieren der Zwischenprodukte der Struktur (39)

$NH_2$-Q-N = N-A (39)

und Kuppeln auf Kupplungskomponenten der Struktur (36).

7. Kondensation von zwei Äquivalenten der Verbindung (40)

$R^{10}$-NH-Q-N = N-A (40)

mit Kohlensäurederivaten, wie z.B. Phosgen, mit Oxalylchlorid, Terephthaloylchlorid und mit Triazinen der Struktur (41)

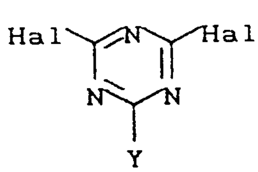

(41)

worin Hal = Cl oder F und

Y die bereits oben genannte Bedeutung zukommt,
oder aber mit Triazinen der Struktur (42)

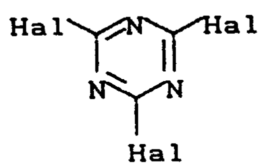

(42)

wobei im letzten Fall eine Kondensation mit $HOR^2$ $HSR^2$ oder $HNR^3R^4$ folgen kann.

Die Zwischenprodukte (39) und (40) sind z,B. zugänglich, indem man Nitroverbindungen der Struktur (43, G = $NO_2$) reduziert oder N-Acyl-Derivate (43, G = $NR^1$-$COCH_3$; $NR^1CHO$) hydrolysiert.

G-Q-N = N-A (43)

Verbindungen (39) und (40) mit X = $CH_2CH_2OH$ können vor der Kondensation auch zu Zwischenprodukten der Struktur (39) und (40) mit X = $CH_2CH_2OSO_3H$ sulfatiert werden.

8. Trisazo/azoxyfarbstoffe, wie z.B. solche der Struktur (12), erhält man durch Zusammenreduktion der Nitroazoverbindungen (43, G = $NO_2$) mittels schonender Reduktionsmittel: wie z.B. Traubenzucker, Maltose oder Saccharose.

Sulfatierungsreaktionen werden bevorzugt mit konzentrierter Schwefelsäure, Schwefelsäure-monohydrat, Oleum oder Schwefeltrioxid durchgeführt. Zur Reduktion der Nitroazoverbindungen zu den entsprechenden Aminoazoverbindungen verwendet man bevorzugt Natriumsulfid oder Natriumhydrogensulfid. Diazotierungs-, Tetrazotierungs- und Azokupplungsreaktionen erfolgen nach literaturbekannten Verfahren.

Die angegebenen Formeln sind die der freien Säuren. Bei der Herstellung werden im allgemeinen die Salze erhalten, insbesondere die Alkalisalze, wie Natrium-, Kalium- oder Lithiumsalze.

Die neuen erfindungsgemäßen Farbstoffe eignen sich zum Färben und Bedrucken von hydroxyl- und amidgruppenhaltigen Materialien, insbesondere Wolle und Cellulosematerialien. Sie zeichnen sich durch eine hohe Reaktivität und einen hohen Fixiergrad aus. Die mit diesen Farbstoffen erhältlichen gelben, orangen und braunen Färbungen und Drucke zeichnen sich außerdem durch eine hohe Faser-Farbstoff-Bindungsstabilität sowie durch eine hervorragende Stabilität gegenüber Oxidationsmitteln, wie peroxid- oder chlorhaltigen Waschmitteln, aus.

Die Farbstoffe können sowohl als Feststofformierungen als auch als konzentrierte Lösungen eingesetzt werden und zur Reinigung einer Ultrafiltration unterworfen werdend.

Sie eignen sich auch in Mischungen mit anderen Reaktivfarbstoffen, insbesondere für Trichromien.

Beispiel 1

23,6 g 7-Amino-1,3-naphthalindisulfonsäure-mono-Natriumsalz werden in 150 ml Wasser/50 g Eis und 20 ml konzentrierter Salzsäure angerührt und bei 5 bis 10 °C tropfenweise mit 17 ml einer Natriumnitritlösung (300 g/l) versetzt. Die Diazotierung ist nach 1,5 Stunden beendet. Der geringe Überschuß an Nitrit wird durch Amidosulfonsäurezugabe zerstört. Die cremefarbene Suspension wird mit Sodalösung auf pH 2,5 gestellt. Dazu tropft man bei 0 - 5 °C eine auf pH 2,0 eingestellte Lösung von 14,3 g der Verbindung der Formel

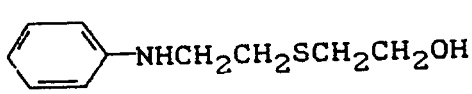

in 100 g Eis und 100 g Wasser. Es wird 4 bis 5 Stunden bei 5 °C gerührt (pH 2,0-2,5). Zur Vervollständigung der Kupplungsreaktion wird der pH-Wert durch Zugabe von Natriumacetat auf 4,5 erhöht und erneut 2 Stunden nachgerührt. Es werden 40 g Kochsalz zugesetzt, 1 Stunde gerührt und der Niederschlag durch Absaugen isoliert. Nach dem Trocknen resultieren 45 g eines salzhaltigen Farbstoffes der Formel

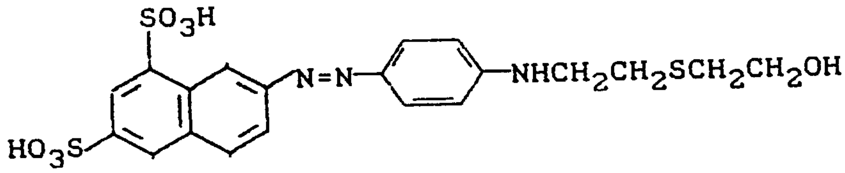

λmax = 428 nm ($H_2O$, pH 7-8)

Beispiel 2

a) 43 g des Farbstoffes aus Beispiel 1 werden in 250 ml Wasser bei pH 8-8,5 angerührt, mit 0,2 g Natriumwolframat versetzt und auf 70 °C erwärmt. Man tropft 30 ml einer ca. 35%igen wäßrigen Wasserstoffperoxidlösung zu. Die Temperatur sollte dabei zwischen 70 und 80 °C betragen. Nach 2 Stunden wird die Oxidation dünnschichtchromatographisch überprüft. Dabei ist auch das während der Oxidation durchlaufene Sulfoxid-Derivat nachweisbar. Es werden gegebenenfalls nochmals 10 bis 15 ml Wasserstoffperoxidlösung nachgesetzt, um auch das restliche Sulfoxid-Derivat zum Sulfon-Derivat aufzuoxidieren. Es wird anschließend 2 Stunden bei 80 °C gerührt, auf Raumtemperatur abgekühlt und mit verdünnter Schwefelsäure auf pH 0,5 bis 1,0 angesäuert. Der Farbstoff wird mit 35 g Kochsalz und 5 g Kaliumchlorid ausgesalzen und isoliert. Nach dem Trocknen erhält man 36 g eines salzhaltigen Farbstoffes der Formel

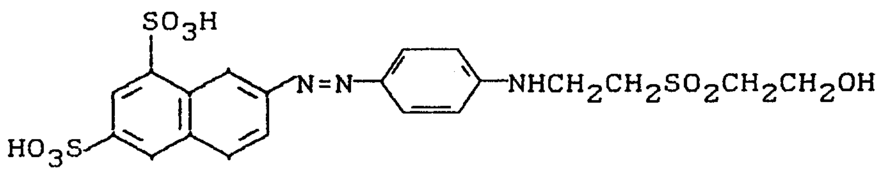

$\lambda_{max}$ = 422 nm ($H_2O$, pH 7-8)

b) Den gleichen Farbstoff erhält man ebenfalls, wenn man direkt auf die oxidierte Stufe der Kupplungskomponente

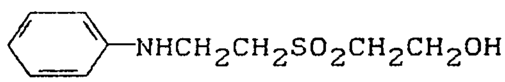

unter den in Beispiel 1 aufgeführten Reaktionsbedingungen kuppelt.

Beispiel 3

a) 35 g des Farbstoffes aus Beispiel 2 werden portionsweise und unter Rühren bei 15-25 °C in 100 ml Schwefelsäure-monohydrat eingetragen und für 2 Stunden bei 20-25 °C gerührt. Die rote Lösung wird anschließend auf 250 g Eis und 50 ml Wasser ausgetragen, mit 30 g Natriumchlorid ausgesalzen und durch Abnutschen isoliert. Die feuchte Farbstoffpaste wird in 150 ml Eiswasser angerührt, und die Mischung mit festem Natriumhydrogencarbonat neutralisiert. Nach Absaugen und Trocknen resultieren 40 g eines salzhaltigen rotbraunen Reaktivfarbstoffpulvers, das Baumwolle in goldgelben Tönen färbt und dem die Struktur

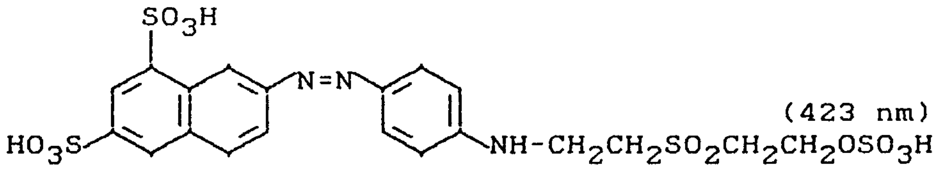

(423 nm)

zukommt.

b) Zum gleichen Reaktivfarbstoff gelangt man, wenn man direkt auf die sulfatierte Stufe der Kupplungskomponente

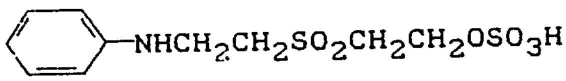

unter den in Beispiel 1 aufgeführten Reaktionsbedingungen kuppelt.

Beispiel 4

Durch eine nachgeschaltete Sulfierung lassen sich Farbstoffe mit besonders hohem Echtheitsniveau herstellen.

Man trägt beispielsweise 35 g des Farbstoffs aus Beispiel 3 portionsweise unter Rühren bei 20 ° C in 100 g 20%iges Oleum ein und erwärmt 2 bis 3 h auf 50 bis 60 ° C. Nach Abkühlen auf 20 bis 25 ° C wird die Lösung auf 200 g Eis und 50 g Wasser ausgetragen, mit 40 g Natriumchlorid ausgesalzen und durch Abnutschen isoliert. Man erhält nach Trocknen 38 g eines Reaktivfarbstoffpulvers mit der Struktur

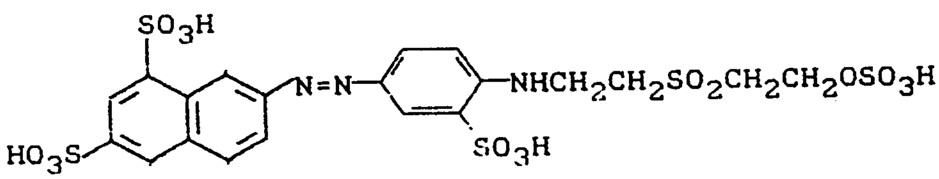

$\lambda_{max}$ = 414 nm ($H_2O$, pH 7-8)

Den gleichen Farbstoff erhält man ebenfalls, wenn man die Schwefelsäuremonohydrat-Lösung aus Beispiel 3 mit 60 g 65%igem Oleum versetzt und anschließend wie beschrieben sulfatiert und aufarbeitet.

Variiert man nun in den Beispielen 1 bis 4 die Diazokomponenten, so sind analog zu den dort aufgeführten Synthesevorschriften weitere interessante Farbstoffe herstellbar:

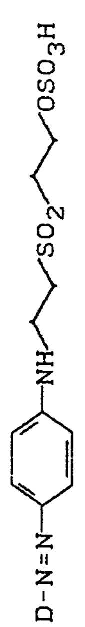

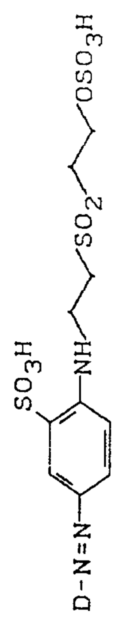

| D | Bsp. | $\lambda_{max}$ ($H_2O$, pH 7-8) | Bsp. | $\lambda_{max}$ ($H_2O$, pH 7-8) |
|---|---|---|---|---|
| 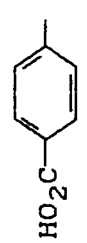 | 5 | 412 | 6 | 402 |
| 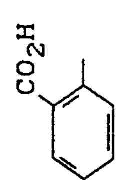 | 7 | 386 | 8 | 379 |
| 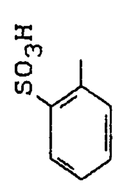 | 9 | 394 | 10 | 385 |
| 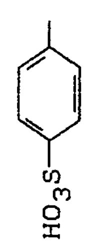 | 11 | 417 | 12 | 407 |
| 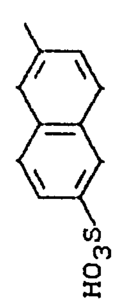 | 13 | 428 | 14 | 419 |
| 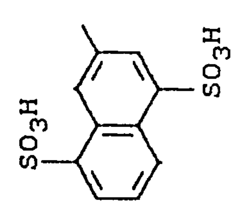 | 15 | 422 | 16 | 414 |

Beispiel 17

20,4 g 4-(Sulfatoethylsulfonyl)-aminobenzol werden analog zu Beispiel 1 diazotiert, und die resultierende Suspension mit Sodalösung auf pH 2,5 gestellt. Dazu tropft man bei 0 bis 5 °C eine auf pH 2,0 eingestellte Lösung von 22,4 g der Kupplungskomponente aus Beispiel 3b in 200 ml Wasser. Es wird 5

Stunden bei pH 1,5 bis 2,5 und 5 °C und anschließend 3 Stunden bei pH 3,5 bis 4,0 und 5 °C gerührt. Der pH-Wert wird dabei mit Natriumacetatlösung erhöht. Nach erfolger Kupplung wird der pH-Wert mit Sodalösung auf 6,0 gestellt und mit 45 g Kochsalz ausgesalzen. Nach weiteren 2 Stunden Rühren wird abgesaugt und getrocknet. Man erhält 42 g eines goldgelben Farbstoffpulvers der Struktur

$\lambda_{max}$ = 427 nm

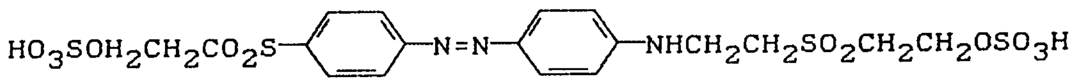

Der gleiche Farbstoff kann auch hergestellt werden, indem man die Kupplungs- oder Diazo-Komponente nicht in der sulfatierten Form, sondern als Hydroxyethylsulfonyl-Derivat einsetzt' Diazotierung und Kupplung werden wie oben beschrieben durchgeführt. Als Zwischenprodukt erhält man einen Farbstoff der Formel

a) 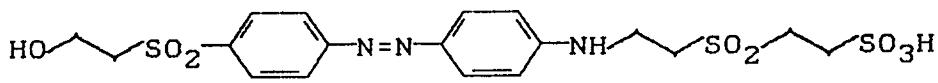

b) 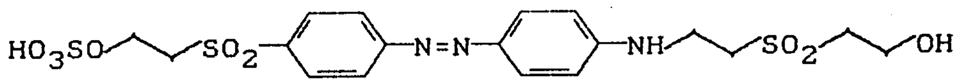

c) 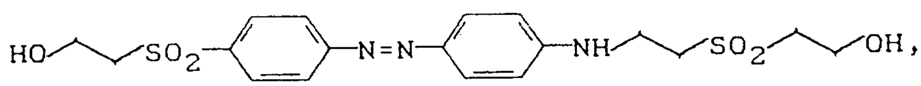,

der nach Isolierung analog Beispiel 3a ein- oder zweifach sulfatiert wird.

Beispiel 18

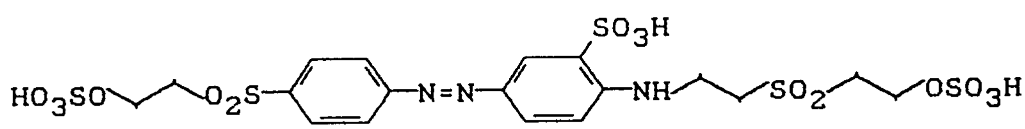

$\lambda_{max}$ = 417 nm ($H_2O$, pH 7-8)

Diesen hochechten Farbstoff erhält man durch nachträgliche Sulfierung des Farbstoffs aus Beispiel 17 nach der in Beispiel 4 beschriebenen Methode.

Ähnlich wichtige und interessante bifunktionelle Reaktivfarbstoffe und auf analoge Weise darstellbar sind:

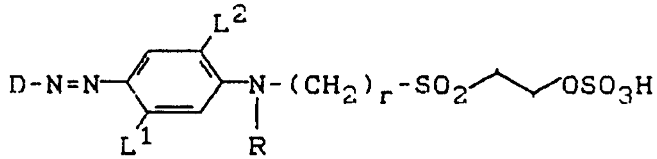

| Bsp. | D | $L^2$ | $L^1$ | R | r |
|---|---|---|---|---|---|
| 19 | 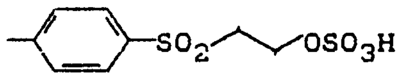 | H | $CH_3$ | H | 2 |
| 20 | 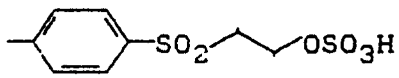 | H | H | H | 3 |
| 21 | 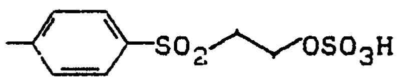 | $SO_3H$ | H | $CH_3$ | 2 |
| 22 | 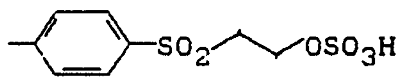 | H | H | $CH_2CH_2SO_2CH_2CH_2OSO_3$ | 2 |
| 23 | 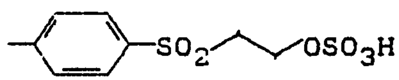 | $SO_3H$ | $CH_3$ | H | 2 |
| 24 | 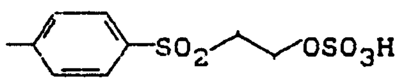 | $SO_3H$ | H | H | 3 |

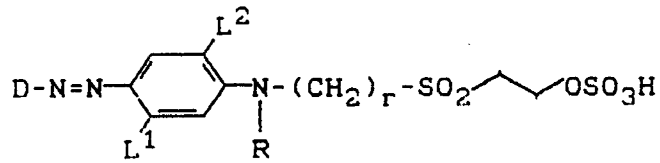

| Bsp. | D | $L^2$ | $L^1$ | R | r |
|---|---|---|---|---|---|
| 25 | 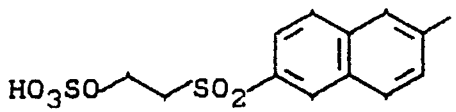 | H | H | H | 2 |
| 26 | 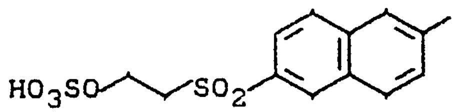 ($\lambda_{max}$=421 nm) | $SO_3H$ | H | H | 2 |
| 27 | 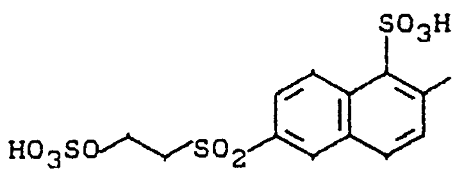 | H | H | H | 2 |
| 28 | 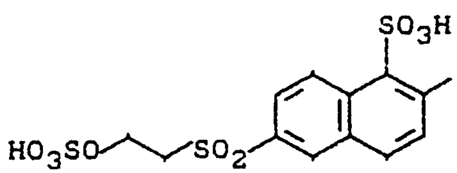 | H | $CH_3$ | H | 2 |

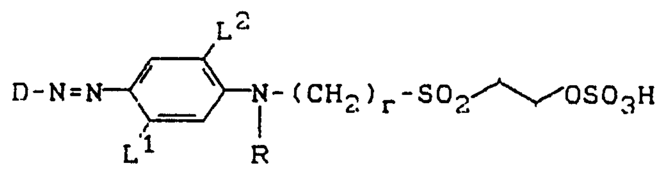

| Bsp. | D | $L^2$ | $L^1$ | R | r |
|---|---|---|---|---|---|
| 29 | 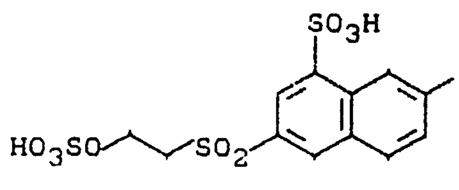 $\lambda_{max}$ = 443 nm) | H | H | H | 2 |
| 30 | 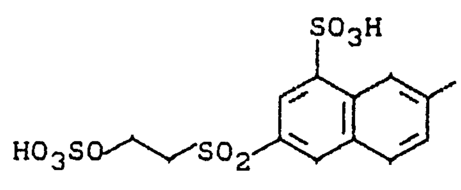 $\lambda_{max}$ = 420 nm) | $SO_3H$ | H | H | 2 |
| 31 | 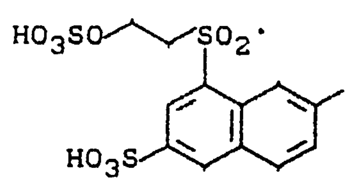 | H | H | H | 2 |

Beispiel 32:

4'-Amino-azobenzol-4-sulfonsäure wird in bekannter Weise diazotiert und auf die Komponente aus Beispiel 2b bei pH 3-5 gekuppelt. Diese Lösung des Disazofarbstoffs der Struktur

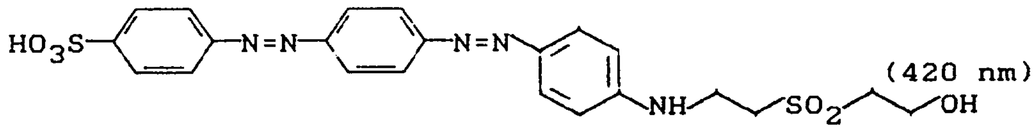

wird durch Aussalzen isoliert und getrocknet. Die Sulfatierung in Analogie zu Beispiel 3a liefert einen Disazoreaktivfarbstoff, der Baumwolle oder Wolle in brillanten orangenen Farbtönen mit hohem Echtheitsniveau färbt und dem folgende Struktur zukommt:

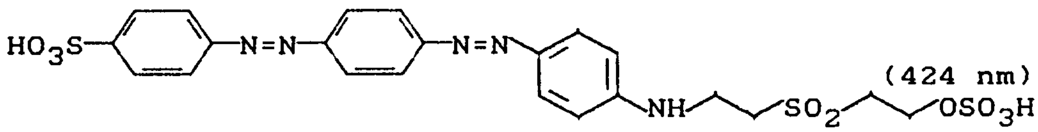

Durch Variation der Diazo- bzw, Kupplungskomponente sind weitere wertvolle orangene bzw. rotstichig braune Disazoreaktivfarbstoffe der Struktur

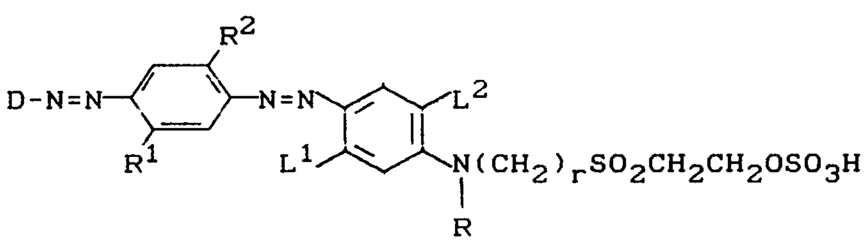

erhältlich (s. Tabelle). Als Diazokomponente eingesetzte faserreaktive Aminoazoverbindungen sind z.B. in EP-A-292 825 beschrieben.

| Bsp. | D | $L^1$ | $L^2$ | $R^1$ | $R^2$ | R | r |
|---|---|---|---|---|---|---|---|
| 33 | 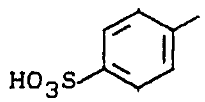 | H | H | H | $SO_3H$ | H | 2 |
| 34 | 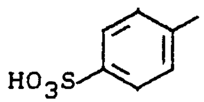 | $CH_3$ | H | H | H | H | 3 |
| 35 | 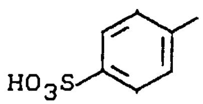 | $CH_3$ | H | H | $SO_3H$ | H | 2 |
| 36 | 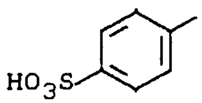 | H | H | H | H | $CH_2CH_2SO_2CH_2CH_2SO_3H$ | 2 |
| 37 | 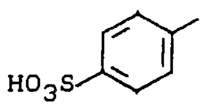 | H | $SO_3H$ | H | H | $CH_3$ | 2 |
| 38 | 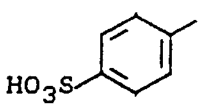 | H | H | $OCH_3$ | $OCH_3$ | H | 2 |
| 39 | 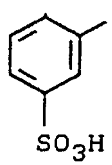 | H | H | H | $OCH_3$ | H | 2 |

| Bsp. | D | $L^1$ | $L^2$ | $R^1$ | $R^2$ | R | r |
|---|---|---|---|---|---|---|---|
| 40 | 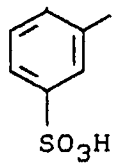 | H | H | $CH_3$ | $OCH_3$ | H | 2 |
| 41 | 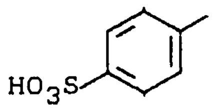 | H | $SO_3H$ | H | $SO_3H$ | H | 2 |
| 42 | 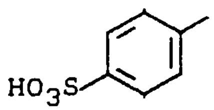 | H | H | $CH_2SO_2CH_2CH_2OSO_3H$ | H | H | 2 |
| 43 | 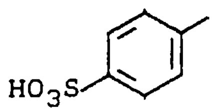 | $CH_3$ | H | $NHCOCH_3$ | H | H | 2 |
| 44 | 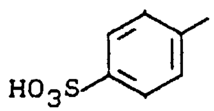 | H | H | $NHCOCH_3$ | $OCH_3$ | H | 2 |
| 45 | 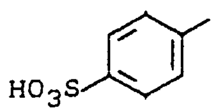 | H | H | $NHCONH_2$ | H | H | 2 |

| Bsp. | D | $L^1$ | $L^2$ | $R^1$ | $R^2$ | R | r |
|---|---|---|---|---|---|---|---|
| 46 | 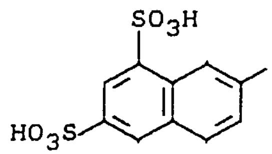 | H | $SO_3H$ | $CH_3$ | H | $CH_2CH_2SO_2CH_2CH_2SO_3H$ | 2 |
| 47 | 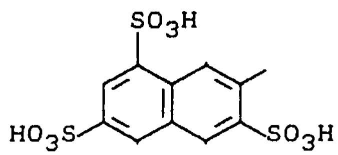 | H | H | H | H | H | 2 |
| 48 | 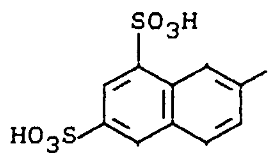 | H | H | $NHCOCH_3$ | H | H | 2 |
| 49 | 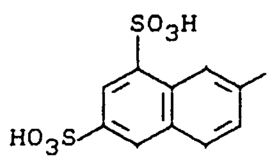 | H | H | $NHCOCH_3$ | $OCH_3$ | $CH_2CH_2SO_2CH_2CH_2OSO_3H$ | 2 |
| 50 | 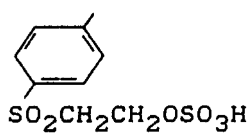 | $CH_3$ | H | $CH_3$ | $SO_3H$ | H | 2 |
| 51 | 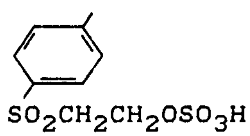 | H | H | $NHCOCH_3$ | $SO_3H$ | H | 2 |

| Bsp. | D | $L^1$ | $L^2$ | $R^1$ | $R^2$ | R | r |
|---|---|---|---|---|---|---|---|
| 52 | 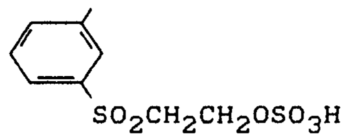 | H | H | H | $SO_3H$ | H | 2 |
| 53 | 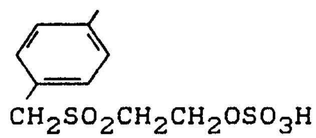 | H | H | $CH_3$ | $SO_3H$ | H | 2 |
| 54 | 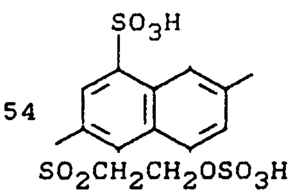 | H | H | $CH_3$ | $SO_3H$ | H | 2 |
| 55 | 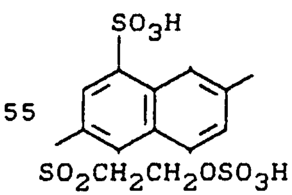 | H | H | H | $SO_3H$ | H | 2 |

Durch Variation der Mittelkomponente sind weitere wertvolle Disazoreaktivkomponenten erhältlich. wie z.B.

Beispiel 56

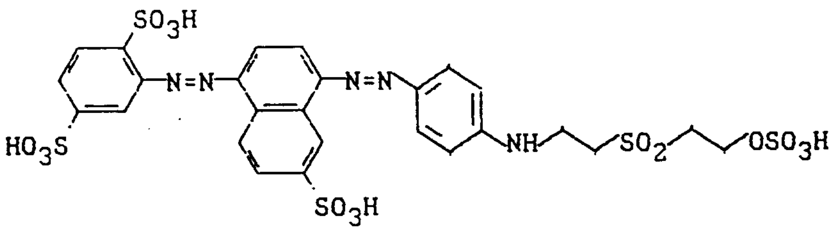

Beispiel 57

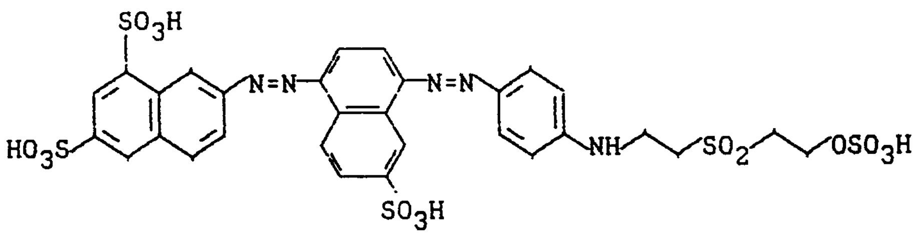

Beispiel 58

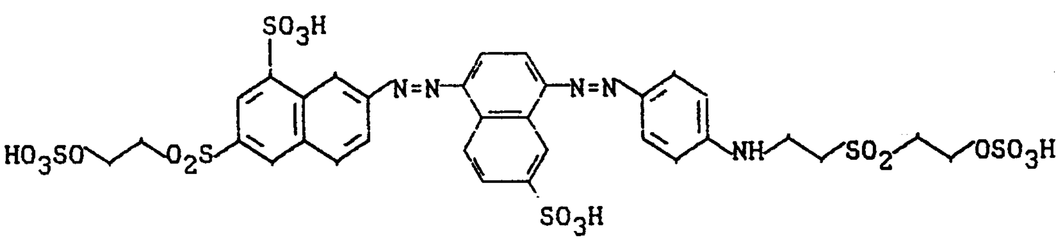

Beispiel 59

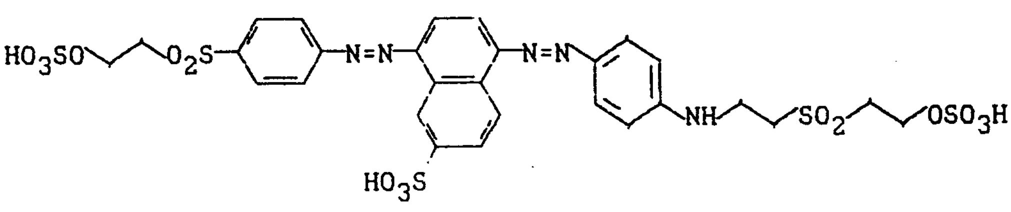

Beispiel 60

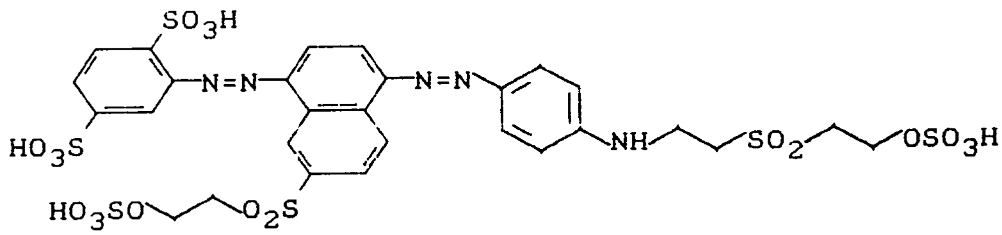

Beispiel 61

Die Farbbase der Struktur

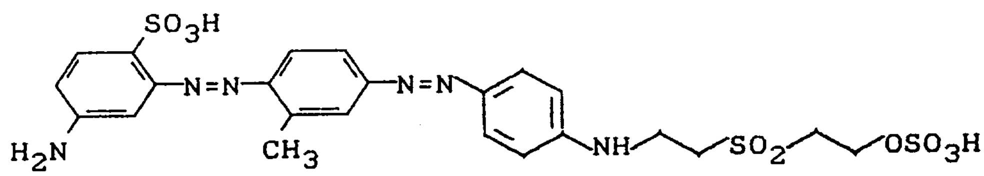

die durch Diazotieren von 5-Acetylamino-2-aminobenzol-sulfonsäure, Kuppeln auf m-Toluidin, Diazotieren der Aminoazoverbindung, Kuppeln auf die Komponente aus Beispiel 2b, Verseifung der N-Acetylgruppierung und Sulfatierung der Hydroxyethylgruppierungen hergestellt werden kann, wird in Wasser bei pH 6,5 angerührt und mit einem 1,2-fachen äquimolaren Überschuß an 5-Chlor-2,4,6-trifluorpyrimidin umgesetzt. Durch Zugabe von Sodalösung hält man den pH-Wert dabei konstant bei 6-7. Nach Reaktionsende wird der Feststoff der Struktur

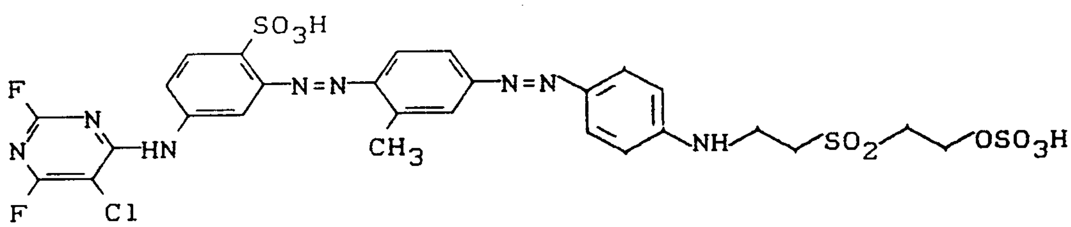

ausgesalzen, durch Abnutschen isoliert und getrocknet. Er färbt Baumwolle in rotstichig gelben Nuancen. Nach dieser Verfahrensvariante sind weitere interessante bifunktionelle Reaktivfarbstoffe erhältlich.

Beispiel 62

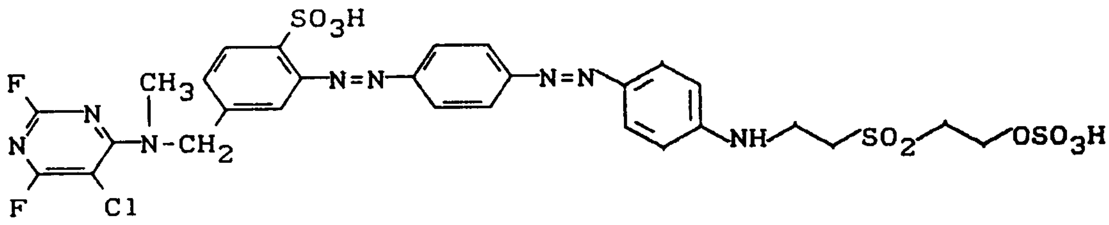

Beispiel 63

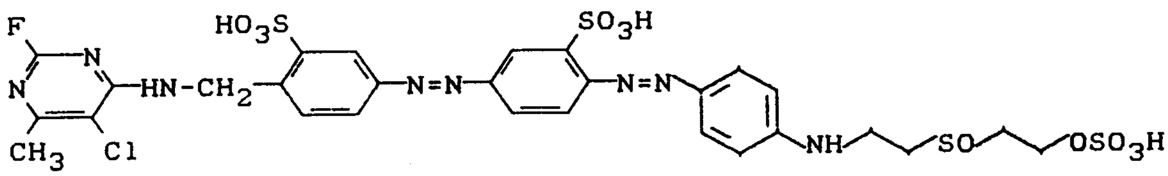

Beispiel 64

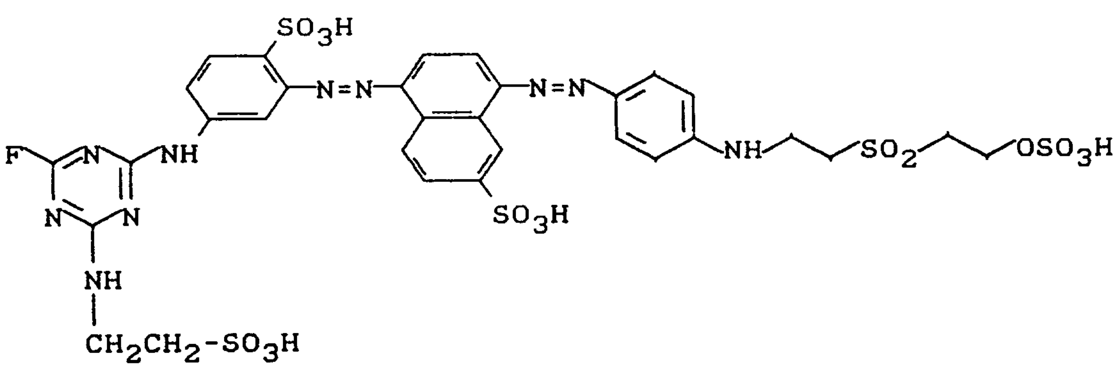

Beispiel 65

2-Amino-5-aminomethyl-1-naphthalinsulfonsäure wird in üblicher Weise diazotiert und auf die Kupplungskomponente aus Beispiel 2b gekuppelt. Nach Sulfatierung der Monoazoverbindung wird bei pH 7-8 mit äquimolarer Menge an 5-Chlor-4,6-difluorpyrimidin kondensiert. Die freigesetzte Fluorwasserstoffsäure wird kontinuierlich durch Sodazugabe neutralisiert. Der Farbstoff wird ausgesalzen, abgesaugt und getrocknet. Er färbt Baumwolle in klaren gelben Tönen und besitzt die Struktur

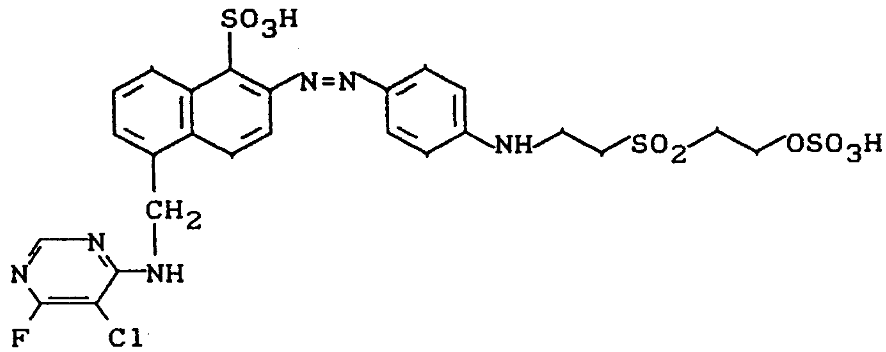

Beispiel 66

54 g 2,2'-(1,2-Ethandiyl)bis[5-aminobenzolsulfonsäure] werden in 300 ml Wasser, 100 g Eis und 60 ml konz. Salzsäure verrührt und danach durch Zugabe von 70 ml einer 30 Vol%igen wäßrigen Natriumnitritlösung tetrazotiert. Die Suspension wird 1 Stunde bei 5 °C gerührt. Der Nitritüberschuß wird durch Zugabe von Amidosulfonsäure nach Reaktionsende entfernt. Dazu fügt man nun eine Lösung von 57,2 g der Verbindung der Formel

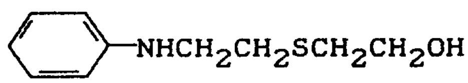

in 400 g Eis, 400 g Wasser und 15 ml konz. Salzsäure. Nach 30 Minuten stellt man bei ca. 10 °C den pH-Wert mit Sodalösung innerhalb einer Stunde auf pH 3,0 bis 3,5 und läßt vier Stunden rühren. Das ausgefallene Zwischenprodukt der Struktur

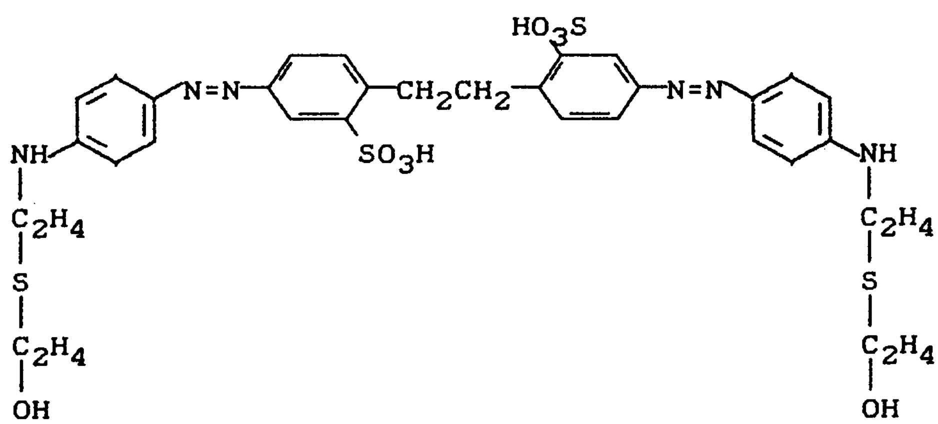

($\lambda_{max}$ = 412 nm) wird durch Abnutschen isoliert, und die feuchte Paste wird direkt weiter umgesetzt. Es kann aber auch auf eine Zwischenisolierung verzichtet werden und die Kupplungsmischung direkt oxidiert werden.

Zur Oxidation suspendiert man die feuchte Paste in 400 ml Wasser, stellt mit Sodalösung auf pH 8,5 und fügt 0,2 g Natriumwolframat zu. Es wird auf 60 °C erwärmt. Ohne weitere Wärmezufuhr dosiert man nun langsam ca. 100 ml einer 30%igen wässrigen Wasserstoffperoxidlösung zu, wobei die Temperatur aufgrund der Reaktionswärme auf ca. 70 bis 75 °C ansteigt, und eine Lösung resultiert. Nach einer einstündigen Nachrührphase bei 75 °C kühlt man auf 20 °C ab, isoliert den ausgefallenen Farbstoff nach Aussalzen und trocknet. Es werden ca. 90 g salzhaltiges Produkt der Struktur

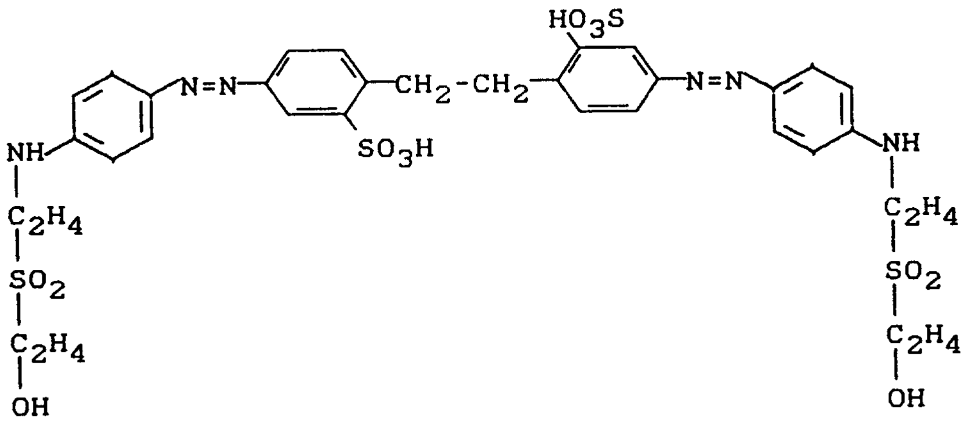

erhalten ($\lambda_{max}$ = 382, 440 (sh) nm)

Diese Menge wird portionsweise bei 20-25 °C in 250 ml Schwefelsäure-monohydrat eingetragen und für ca. 3 Stunden zur Lösung verrührt. Beim Austragen auf 200 ml Wasser/400 g Eis fällt der Farbstoff kristallin aus. Es werden portionsweise 20 g festes Natriumhydrogencarbonat eingetragen, und danach wird abgesaugt. Die Isolierung wird in 200 ml Wasser angerührt und mit Sodalösung neutralisiert. Nach Sprühtrocknung dieser Mischung werden ca. 150 g salzhaltiger Reaktivfarbstoff erhalten, dem die Struktur

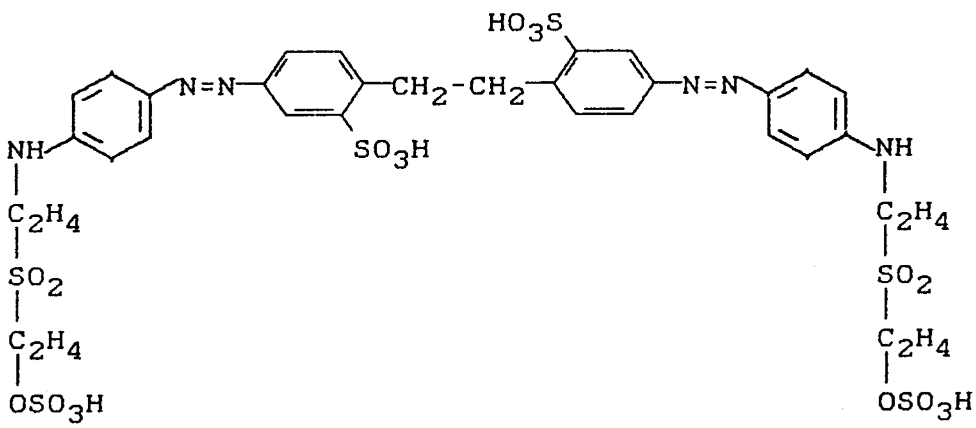

zukommt und der Baumwolle in gelben Farbtönen färbt ($\lambda_{max}$ = 382, 440(sh) nm).

Durch Variation der Tetrazokomponente in Beispiel 66 werden weitere interessante und wichtige Disazofarbstoffe beziehungsweise Trisazofarbstoffe erhalten:

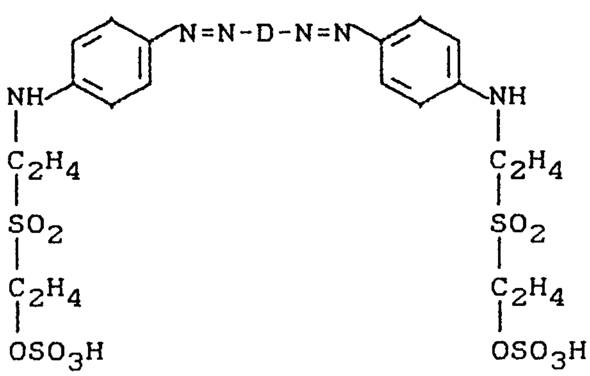

Beispiel 67

D =

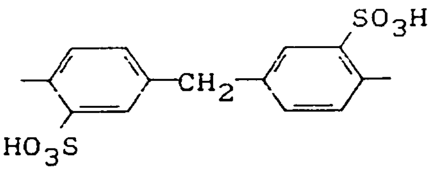

Beispiel 68

D =

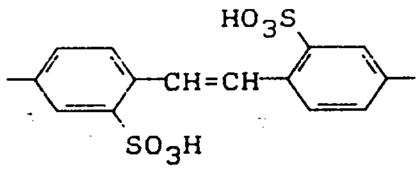

Beispiel 69

D =

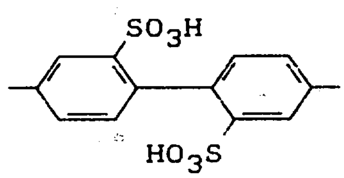

Beispiel 70

D =

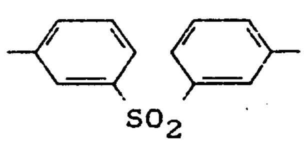

Beispiel 71

D =

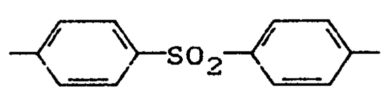

Beispiel 72

D =

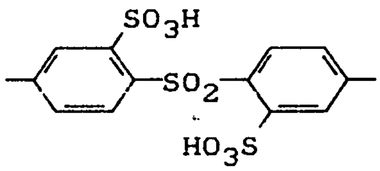

Beispiel 73

D = 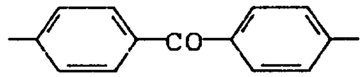

Beispiel 74

D = 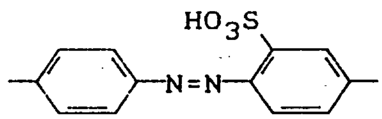

Beispiel 75

D = 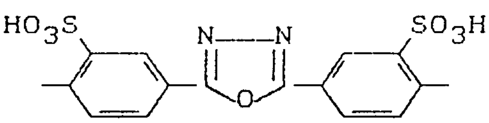

Beispiel 76

D = 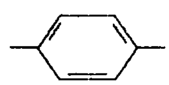

Beispiel 77

D = 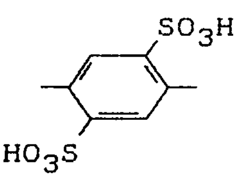

Beispiel 78

31,6 g 2-Amino-5-nitrobenzolsulfonsäure werden in 250 ml Wasser und 40 ml konz. Salzsäure bei 70 °C gelöst. Durch Einwerfen von Eis wird auf 15 °C abgekühlt und mit 35 ml 30 Vol%iger wäßriger Natriumnitritlösung diazotiert. Nach 30 Minuten Nachrührzeit bei 15 °C wird der Nitritüberschuß mit Amidosulfonsäure entfernt. Dazu fügt man 33,2 g der Kupplungskomponente aus 2b und stellt innerhalb von 3 Stunden den pH-Wert der Mischung langsam auf 4,5. Es wird mit 30 g Kochsalz ausgesalzen. Nach dem Abkühlen wird das ausgefallene Zwischenprodukt der Struktur

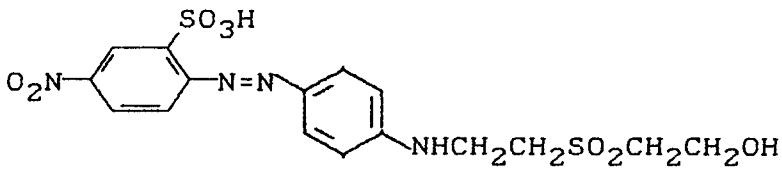

durch Abnutschen isoliert.

130 g feuchte Nitroazoverbindung werden in 300 ml Wasser und bei pH 7 auf 80 °C erwärmt. Es werden anschließend 50 ml einer ca. 30%igen wäßrigen Natriumhydrogensulfidlösung innerhalb von 20 Minuten zudosiert und 2 Stunden bei 80 °C gerührt. Das Ende der Reduktion wird dünnschichtchromatographisch überprüft. Danach versetzt man mit 5 g Aktivkohle und klärt die heiße Lösung ab. Nach dem Abkühlen auf 20 °C stellt man auf pH 5,0 und salzt mit 40 g Kaliumchlorid aus. Nach Absaugen und Trocknen erhält man 70 g salzhaltiges Aminoazo-Zwischenprodukt der Struktur

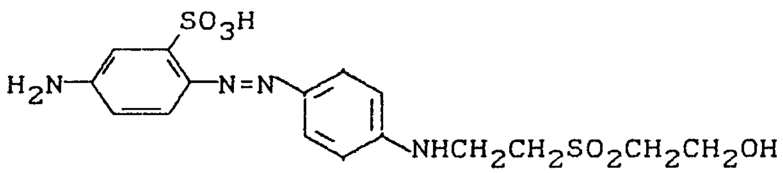

.

## Beispiel 79

70 g des Zwischenproduktes von Beispiel 78 werden in 400 ml Wasser, 100 g Eis und 40 ml konz. Salzsäure verrührt und durch Zudosieren von ca. 25 ml der 30 Vol%igen Natriumnitritlösung bei 5 bis 15 °C diazotiert. Nach einer zweistündigen Nachrührphase werden 27 g der Kupplungskomponente aus Beispiel 2b zugefügt und der pH-Wert mit Sodalösung innerhalb von 3 Stunden langsam auf 5,0 erhöht (Temperatur: ca. 20 °C). Isolierung und Trocknung liefern ca. 75 g der Reaktivfarbstoffvorstufe der Struktur

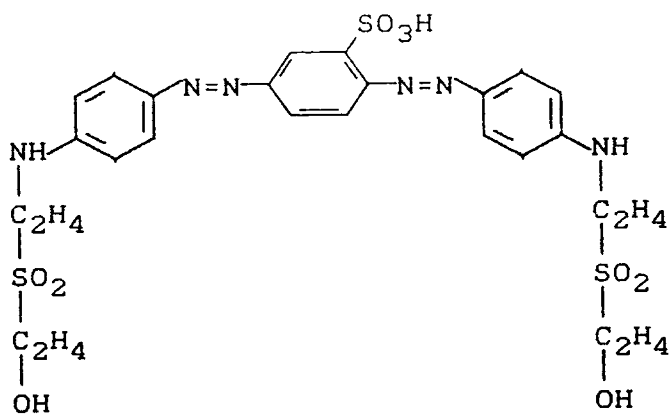

## Beispiel 80

Diese Vorstufe aus Beispiel 79 erhält man auch, wenn man die Zwischenverbindung der Struktur

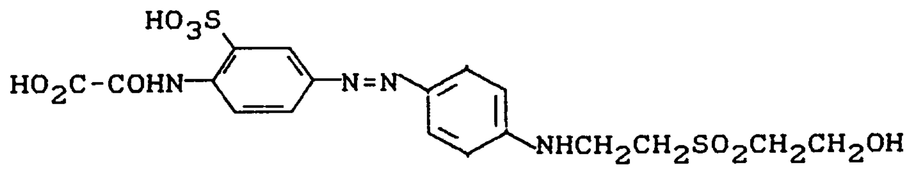

die durch Diazotieren von N-(4-Amino-2-sulfophenyl)oxalsäuremonoamid, kuppeln auf die Kupplungskomponente aus Beispiel 2b erhalten wird, sauer verseift, die resultierende Aminoverbindung diazotiert und auf die Kupplungskomponente aus Beispiel 2b kuppelt.

Beispiel 81

75 g des Disazodisulfons aus Beispiel 79 werden in 200 ml Schwefelsäure-monohydrat bei 20 bis 25°C portionsweise eingetragen und bis zur Lösung bei 25 bis 30°C verrührt. Beim Austragen auf 200 ml Wasser/400 g Eis fällt der Farbstoff bereits teilweise kristallin aus. Eine vollständigere Fällung erreicht man nach Zudosieren von 30 bis 40 g fester Soda. Es wird abgesaugt, und die isolierte Paste in 250 ml Wasser angerührt. Nach Neutralisation mittels Sodalösung auf pH 6,0 wird die Mischung sprühgetrocknet, beziehungsweise an Rotationsverdampfer bis zur Trockene aufkonzentriert. Man erhält ca. 130 g salzhaltigen Reaktivfarbstoff der Struktur

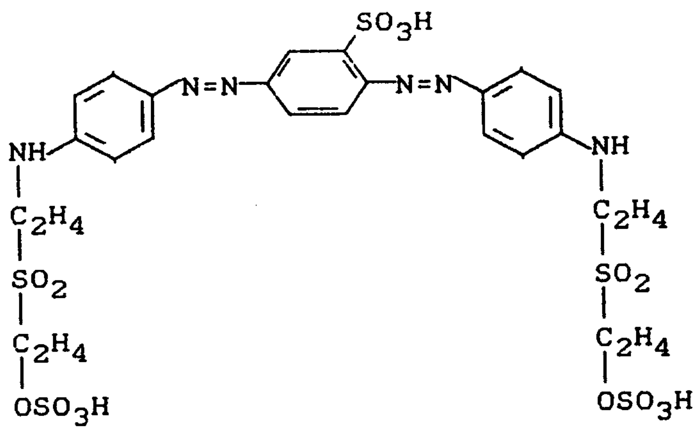

der Baumwolle in klaren goldgelben Nuancen färbt.

Eine andere Variante der Herstellung von Beispiel 81 ist die Umsetzung des Disazodisulfons aus Beispiel 79 mit Oleum im Laborkneter. Dabei wird die Reaktionsmischung bei ca. 70 bis 80°C/180 mbar eindosiert und dann die Temperatur auf ca. 140°C/2 mbar erhöht. Es wird zur Trockene aufkonzentriert, wobei ca. 115 g Farbstoffpulver anfallen.

Beispiel 82

Setzt man als Startkomponente in Beispiel 78 anstelle von 2-Amino-5-nitrobenzolsulfonsäure nun 2-Amino-6-nitro-4,8-naphthalindisulfonsäure ein und verfährt in Analogie zu Beispiel 78, 79 oder 81, so resultiert ein goldgelber Reaktivfarbstaff der Struktur

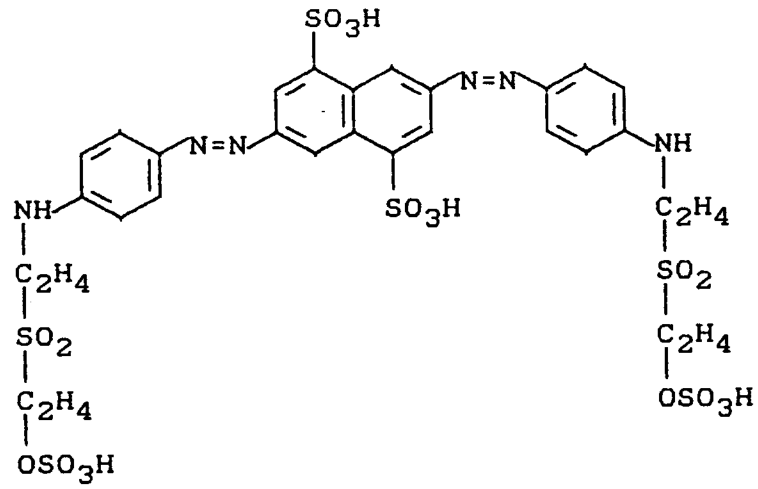

Beispiel 83

70 g des Aminoazozwischenprodukts aus Beispiel 78 werden in 200 ml Schwefelsäure bei 20 bis 25 °C eingetragen und für 2 Stunden bei 30 °C gerührt. Die Lösung wird vorsichtig auf eine Vorlage aus 200 ml Wasser/400 g Eis ausgetragen. Zur Ausfällung des Dinatriumsalzes wird portionsweise mit 20 g fester Soda versetzt und gegebenenfalls mit diversen Mengen an Kochsalz ausgesalzen. Der orangegelbe Niederschlag wird isoliert und bei pH 6,0 in 300 ml Wasser gelöst. Das faserreaktive Zwischenprodukt der Struktur

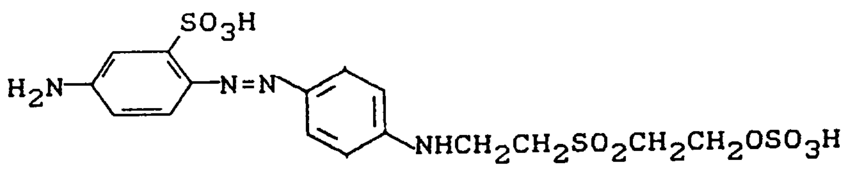

wird am günstigsten in Lösung weiter umgesetzt.

Beispiel 84

In die Lösung des Zwischenprodukts aus Beispiel 82 wird unter entsprechenden Sicherheitsvorkehrungen bei 30 °C und pH 6 bis 6,5 solange Phosgen eingeleitet, bis keine freie Farbbase mehr nachweisbar ist.

Der pH-Wert wird durch gleichmäßige Zugabe von Sodalösung konstant gehalten. Nach Reaktionsende wird zur Vernichtung restlichen Phosgens 2 Stunden bei 40 °C nachgerührt (pH 6,0). Es wird auf 20 °C abgekühlt und mit 30 g Kochsalz ausgesalzen. Isolierung und Trocknung liefern ca. 125 g eines orangegelben salzhaltigen Farbstoffpulvers, das die Struktur

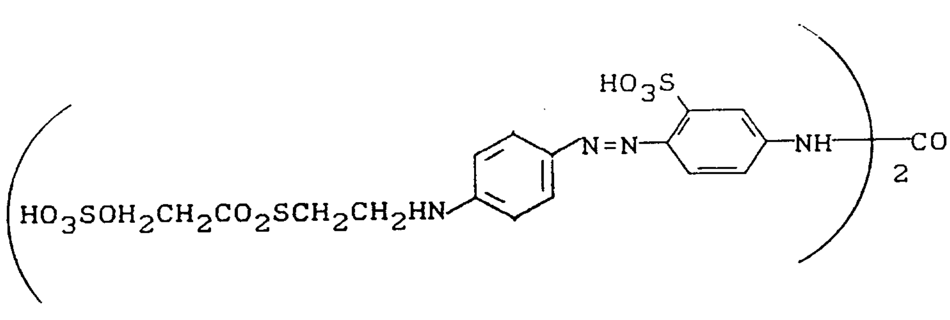

aufweist und Baumwolle in gelben Farbtönen färbt.

Beispiel 85

Die Lösung aus Beispiel 82 wird bei 10 bis 15 °C und konstantem pH 6,0 bis 6,5 mit 13 g Cyanurchlorid umgesetzt. Der pH-Wert wird mit Sodalösung kontrolliert. Nach ca. 2 Stunden ist die Reaktion beendet. Es wird nochmal eine Stunde bei 30 °C gerührt, die Lösung mittels Filterhilfe geklärt und der Farbstoff durch Zugabe ausreichender Mengen Kochsalz ausgesalzen. Es werden ca. 135 g salzhaltiger Reaktivfarbstoff isoliert, dem die Struktur

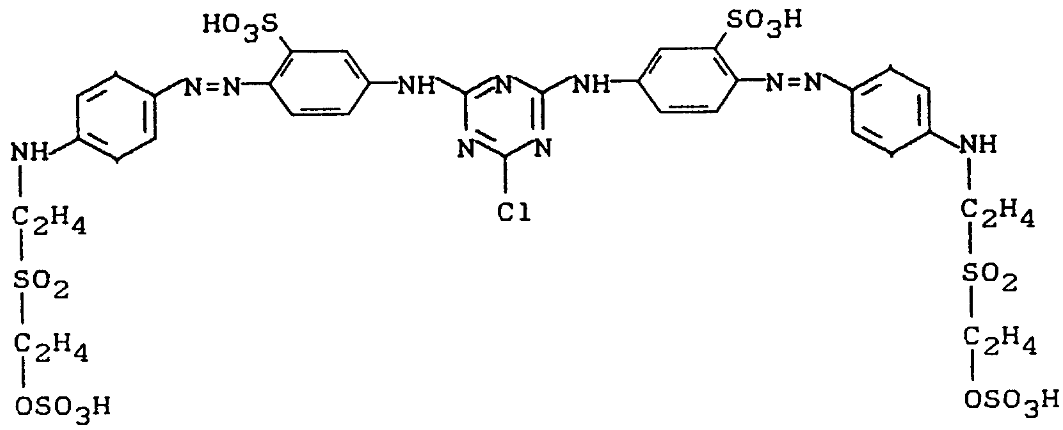

zukommt und der Baumwolle in gelben Farbtönen färbt. Wählt man anstelle von Cyanurchlorid in Beispiel 85 äquimolare Mengen an Cyanurfluorid, 2-(2-Sulfoethyl)-amino-4,6-dichlortriazin, 2-(3-Sulfophenyl)amino-4,6-difluortriazin oder andere vergleichbare Dihalogentriazinderivate, so gelangt man zu folgenden interessanten Gelbfarbstoffen:

Fb =

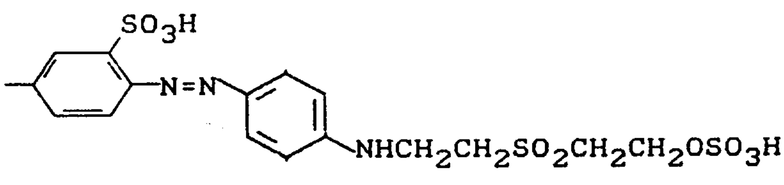

Beispiel 86

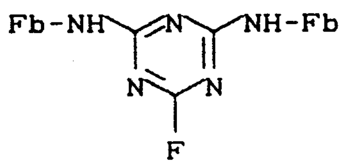

Beispiel 87

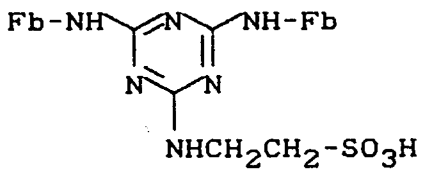

Beispiel 88

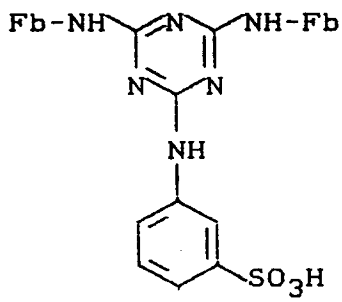

Beispiel 89

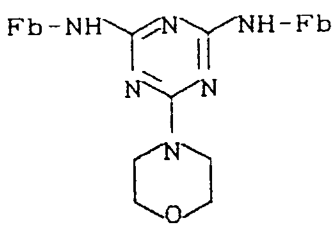

Beispiel 90

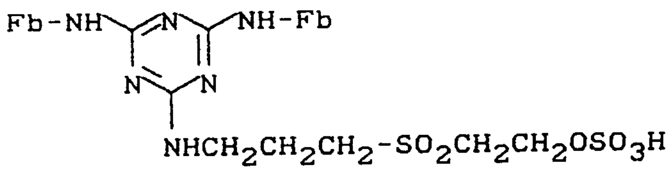

Beispiel 91

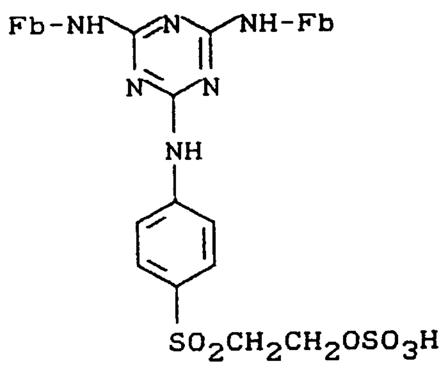

Durch Variation der Kupplungskomponente in den vorausgegangenen Beispielen sind in Analogie folgende ebenfalls wichtige Reaktivfarbstoffbeispiele $Fb(C_2H_4\text{-}SO_2\text{-}C_2H_4\text{-}OSO_3H)_2$ zugänglich:

Beispiel 92

Fb =

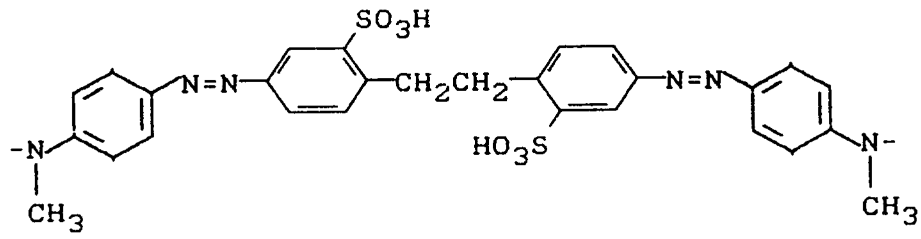

Beispiel 93

Fb =

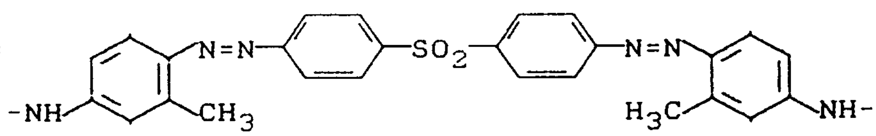

Beispiel 94

Fb =

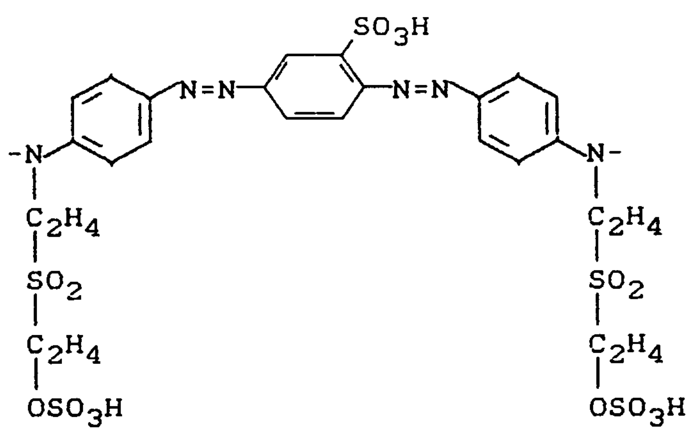

Beispiel 95

Fb =

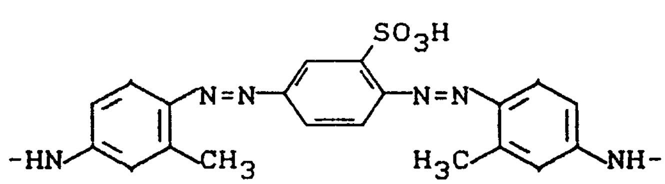

Beispiel 96

Fb =

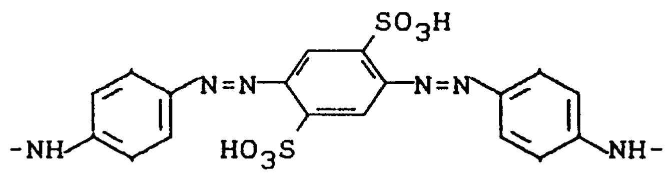

Beispiel 97

Fb =

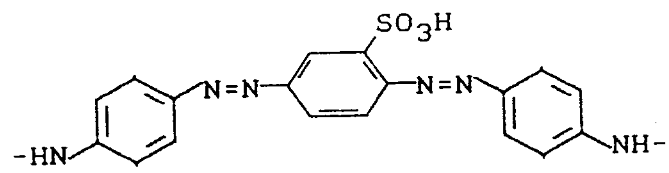

Beispiel 98

Der Azofarbstoff aus Beispiel 78, wird als feuchte Paste in 500 ml Wasser bei 60 ° C gelöst. Mit ca. 35 ml konz. Natronlauge stellt man einen pH-Wert von 12,0 ein und fügt anschließend 20 g Traubenzucker zu. Die Reduktionsreaktion verläuft leicht exotherm. Es wird eine weitere Stunde bei 65-70 ° C gerührt, anschließend auf 20 ° C abgekühlt, auf pH 6,0 gestellt, abgesaugt und das isolierte Produkt getrocknet. Es resultieren ca. 60 g salzhaltiges Produkt, dem die Struktur ($\lambda_{max}$ = 451 nm ($H_2O$)

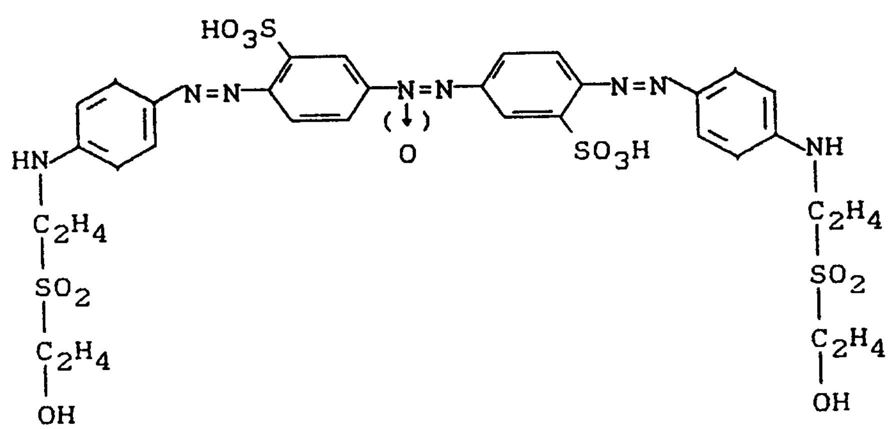

zukommt.

35 g dieses nichtfaserreaktiven Farbstoffs werden portionsweise bei 15-25 ° C in 100 ml Schwefelsäuremonohydrat eingetragen und bis zur Lösung verrührt. Bei 25-30 ° C versetzt man mit 20 ml 20%igem Oleum und rührt eine Stunde nach. Diese Lösung trägt man anschließend auf eine Vorlage aus 100 ml gesättigter Kochsalzlösung und 300 g Eis aus. Der ausgefallene Farbstoff wird abgesaugt. Die isolierte Säurepaste wird in 200 ml Wasser angerührt und mit festem Natriumhydrogencarbonat auf pH 5,5 eingestellt. Die Farbstofflösung wird am Rotationsverdampfer total aufkonzentriert und der resultierende, noch feuchte Farbstoff getrocknet. Man erhält ca. 55 g natriumsulfathaltigen Reaktivfarbstoff der Struktur ($\lambda_{max}$ = 454 nm ($H_2O$)),

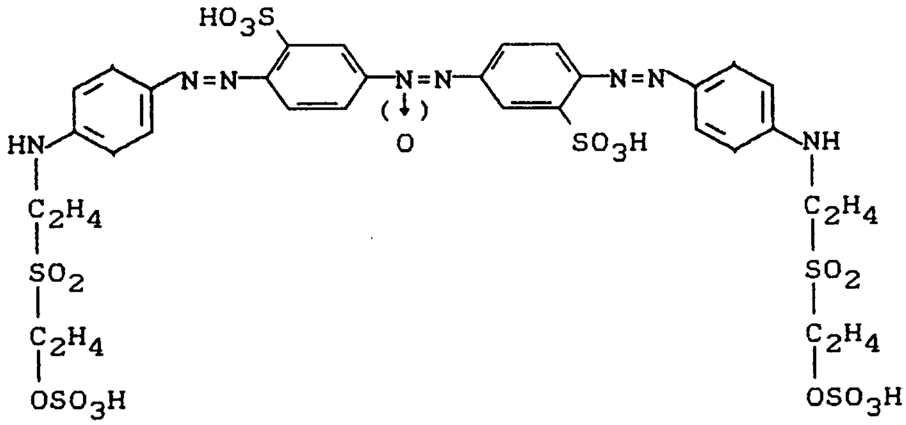

der Baumwolle in rotstichig braunen Tönen färbt.

Durch Variation von Diazo- bzw. Kupplungskomponente sind in Analogie zur Herstellungsvorschrift des Beispiels 98 auch die nachfolgenden Farbstoffbeispiele
$Fb(-C_2H_4-SO_2-C_2H_4-OSO_3H)_2$ bzw.
$Fb(-C_2H_4-SO_2-C_2H_4-OSO_3H)_4$ (s. Beispiel 101),
zugänglich.

Beispiel 99

Fb =

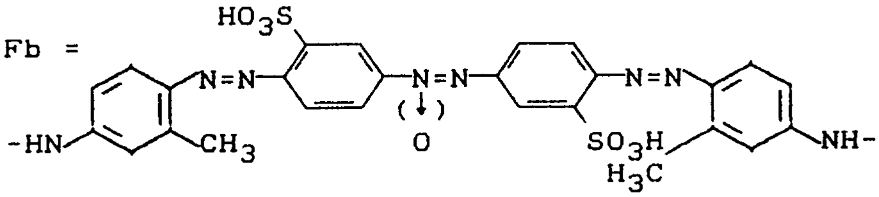

Beispiel 100

Fb =

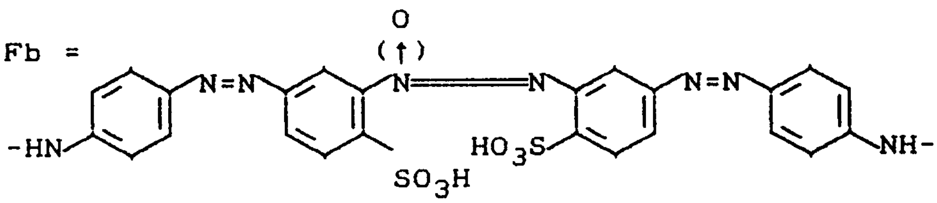

Beispiel 101

Fb =

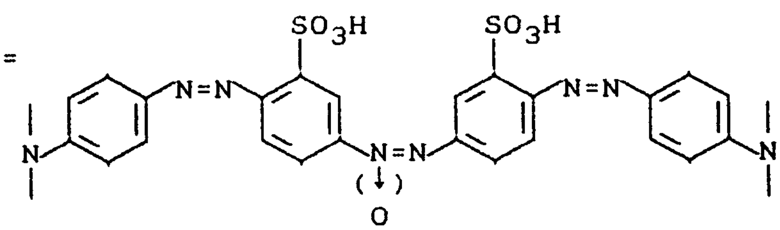

Beispiel 102

Fb =

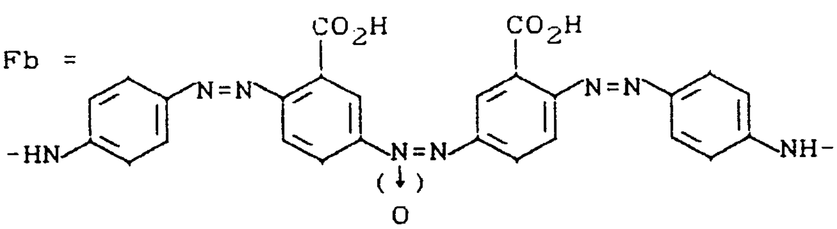

Weitere wertvolle Farbstoffe erhält man, wenn man die Farbstoffe, die in den Beispielen 66 bis 91 beschrieben sind, bzw. deren angekuppelten Vorstufen analog zu den Vorschriften in Beispiel 4 sulfiert.

Ausgewählte Beispiele sind:

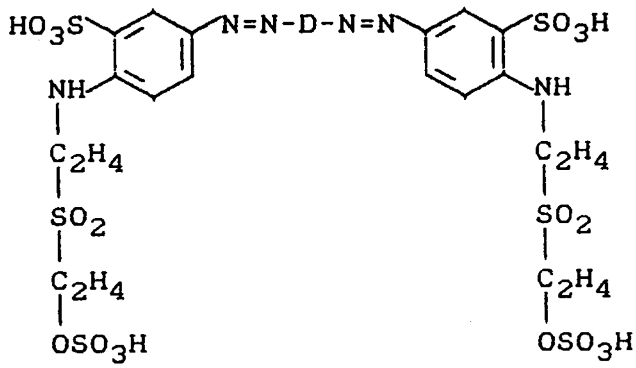

Beispiel 103

D = 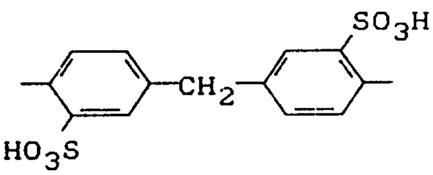

Beispiel 104

D = 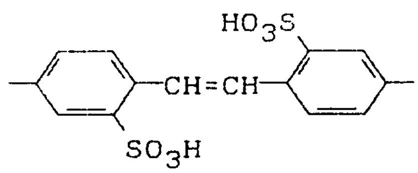

Beispiel 105

D = 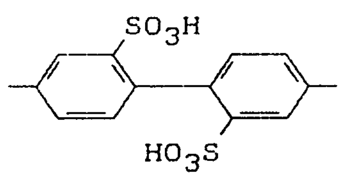

Beispiel 106

D = 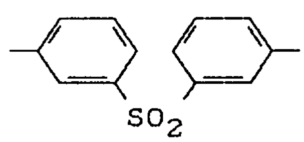

Beispiel 107

D = 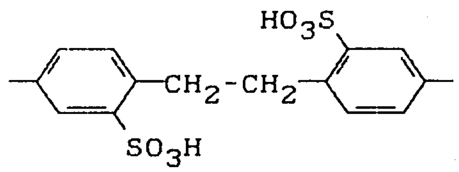

Beispiel 108

D = 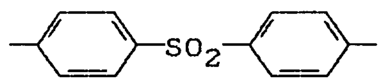

Beispiel 109

D = 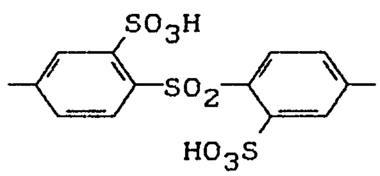

Beispiel 110

D = 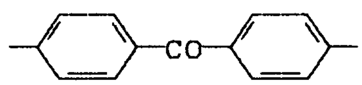

Beispiel 111

D = 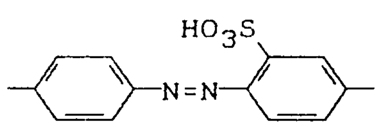

Beispiel 112

D = 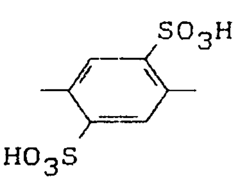

Beispiel 113

D =

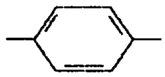

Beispiel 114

D =

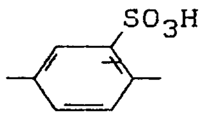

Beispiel 115

D =

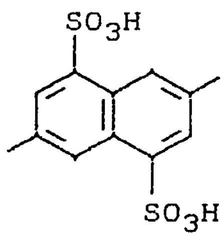

Beispiel 116

D =

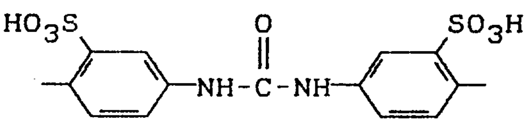

Beispiel 117

D =

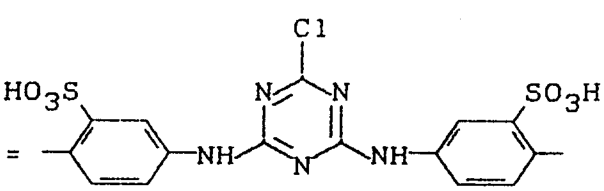

Beispiel 118

D = 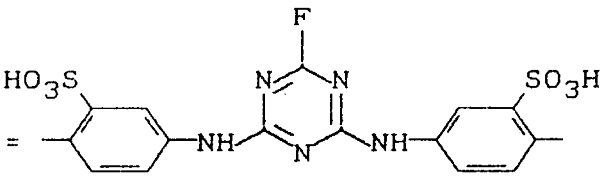

Beispiel 119

D = 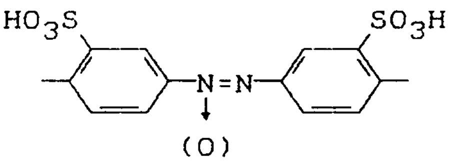

Beispiel 120

D = 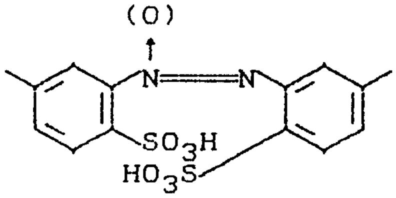

Beispiel 121

D = 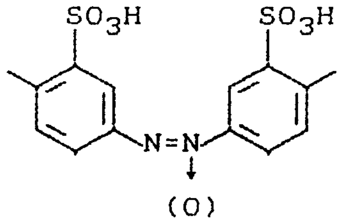

Beispiel 122

D = 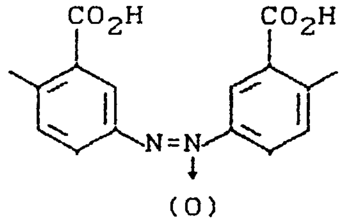

Ebenfalls interessante Farbstoffe
Fb $(-C_2H_4-SO_2-C_2H_4-OSO_3H)_2$ bzw.
Fb $(-C_2H_4-SO_2-C_2H_4-OSO_3H)_4$ (s. Beispiel 125)
erhält man, wenn man in Analogie zu den vorangehenden Beispielen substituierte Derivate der in den Beispielen 1 bis 3 beschriebenen Kupplungskomponenten einsetzt.

Beispiel 123

Fb =

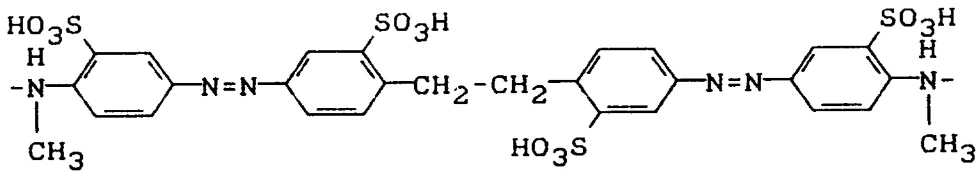

Beispiel 124

Fb =

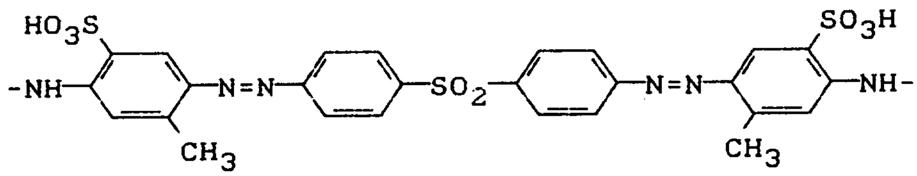

Beispiel 125

Fb =

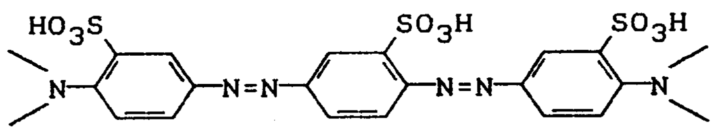

Beispiel 126

Fb =

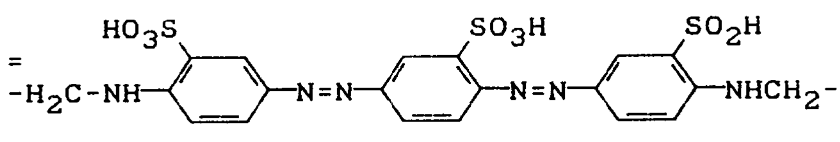

Färbevorschrift 1

2 Teile des gemäß Beispiel 32 erhältlichen Farbstoffes werden in 100 ml Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 50 °C, wobei nach 30 Minuten 40 Teile kalzinierte Soda und nochmals 60 Teile Natriumchlorid zugegeben werden. Man hält die Temperatur 30 Minuten auf 50 °C, spült und seift dann die Färbung während 15 Minuten in einer 0,3%igen kochenden Lösung eines nichtionischen Waschmittels, spült und trocknet. Man erhält eine goldgelbe Färbung mit guten Echtheitseigenschaften.

Färbevorschrift 2

4 Teile des in Beispiel 66 hergestellten Reaktivfarbstoffes werden in 50 Teilen Wasser gelöst. Dazu gibt man 50 Teile einer Lösung, die pro Liter 5 g Natriumhydroxyd und 10 g kalziniertes Soda enthält. Mit der erhaltenen Lösung wird ein Baumwollgewebe foulardiert, so daß es um 70 % seines Gewichtes zunimmt, und dann auf eine Kaule aufgewickelt. Das Baumwollgewebe wird so während 3 bis 12 Stunden bei Raumtemperatur gelagert. Danach wird die gefärbte Ware gespült, während einer Viertelstunde mit einem nichtionischen Waschmittel kochend geseift, nochmals gespült und getrocknet. Man erhält eine gelbe Färbung mit guten Echtheitseigenschaften.

Tiefschwarze Färbungen werden erhalten, wenn man geeignete Mischungen von Farbstoffbeispiel 32 mit dem Farbstoff der Formel

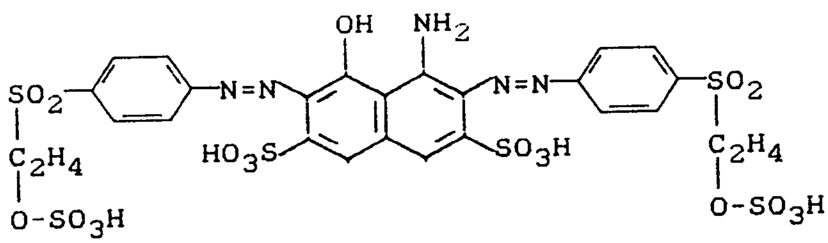

oder einem Salz davon einsetzt.

Grüne Färbungen resultieren, wenn man geeignete Mischungen von Farbstoffbeispiel 66 mit dem Farbstoff der Formel

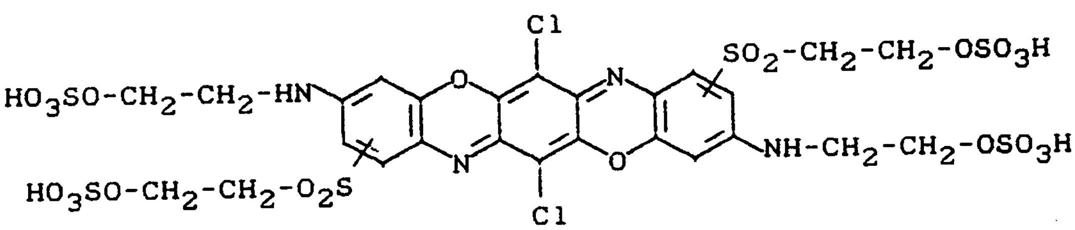

oder einem Salz davon einsetzt.

**Patentansprüche**

**1.** Reaktivfarbstoff der Struktur (1)

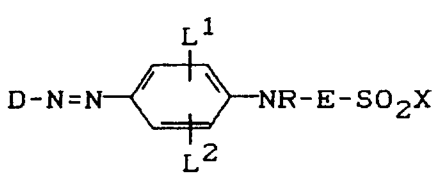

(1)

worin bedeuten

D Rest einer Diazokomponente

X zusammen mit der $SO_2$-Gruppe den Rest einer faserreaktiven Gruppe

$L^1$ H, $C_1$-$C_4$-Alkyl, $C_1$-$C_4$-Alkoxy, $CO_2H$, NHCO-$C_1$-$C_4$-Alkyl,$NHCONH_2$ oder Halogen,

$L^2$ H, $SO_3H$, $C_1$-$C_4$-Alkyl oder $C_1$-$C_4$-Alkoxy,

R H, $C_1$-$C_4$-Alkyl, $CH_2CO_2H$, $CH_2CH_2CO_2H$, $CH_2CH_2SO_3H$, $CH_2CH_2OH$, $CH_2CH_2OSO_3H$ oder -E-$SO_2$X,

E $-(CH_2-CH_2-O)_i-(CH_2)_r-$, wobei i = 0 oder 1 und r = 2 oder 3,

wobei der Farbstoff wenigstens eine wasserlöslich machende Gruppe aufweist.

**2.** Farbstoff gemäß Anspruch 1, dadurch gekennzeichnet, daß bedeuten

D den Rest einer Diazokomponente, aus der Benzol-, Naphthalin- oder Azobenzolreihe oder ein Rest der Formel

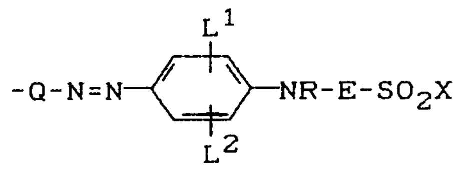

worin

Q ein bivalenter aromatischer oder heteroaromatischer Rest ist,

und die übrigen Gruppen, unabhängig voneinander, die in Anspruch 1 angegebene Bedeutung haben.

**3.** Reaktivfarbstoff gemäß wenigstens einem der vorhergehenden Ansprüche, dadurch gekennzeichnet, daß

X $CH=CH_2$ oder $CH_2CH_2OSO_3H$, $CH_2CH_2$-$S_2O_3H$, $CH_2CH_2OCOCH_3$, $CH_2$-$CH_2$-$OPO_3H_2$, $CH_2CH_2Cl$ oder $CH_2CH_2OH$

bedeutet.

**4.** Reaktivfarbstoff gemäß wenigstens einem der vorhergehenden Ansprüche, dadurch gekennzeichnet, daß

Q ein bivalenter aromatischer oder heteroaromatischer Rest der Struktur

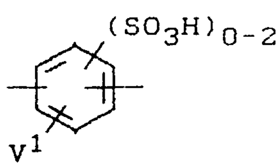 ,

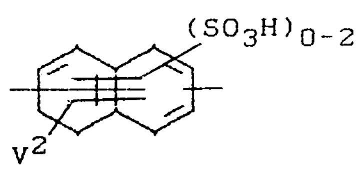 ,

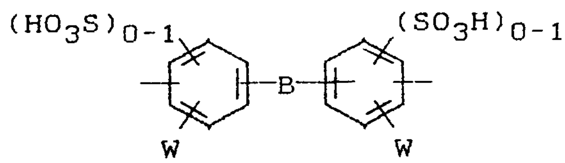 ,

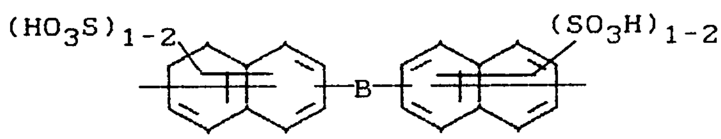

oder 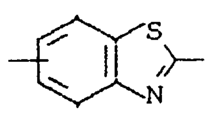

mit $V^1$,$V^2$,W = unabhängig voneinander Wasserstoff oder ein für Carbocyclen typischer Substituent,

B = direkte Bindung oder ein Brückenglied

ist.

**5.** Reaktivfarbstoff gemäß Anspruch 4,
worin

B = direkte Bindung oder ein Brückenglied der Formel $CH_2$, $CH_2$-$CH_2$, $CH=CH$, $C \equiv C$ O, S, SO, $SO_2$, CO, $CO_2$, $OCH_2CH_2O$, $CH_2$-O-$CH_2$, $CH_2CH_2OCH_2CH_2$, NHCO, NHCONH, $NR^1$, N=N, N=N→O, O←N=N→O, NHCOCONH,

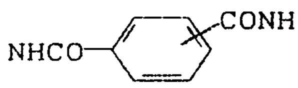 , 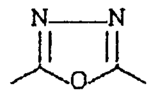 ,

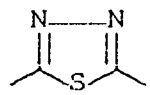 ,

oder ein Triazinylrest der Struktur

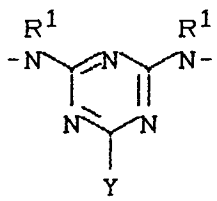

worin

$R^1$ = jeweils unabhängig voneinander H oder $C_1$-$C_4$-Alkyl und

Y = F, Cl, Br, $OR^2$, $SR^2$, $NR^3R^4$,

$R^2$ = H, $C_1$-$C_6$-Alkyl, mit OH, Halogen, $C_1$-$C_4$-Alkoxy, $CO_2H$, $SO_3H$ bzw. $OSO_3H$ substituiertes $C_1$-$C_6$-Alkyl, Cyclohexyl, Furfuryl, Phenyl, mit OH, $CO_2H$, $SO_3H$, $C_1$-$C_4$-Alkyl oder $C_1$-$C_4$-Alkoxy substituiertes Phenyl oder mit OH, $CO_2H$ oder $SO_3H$ substituiertes oder unsubstituiertes Naphthyl,

$R^3$, $R^4$ = unabhängig voneinander Wasserstoff, $C_1$-$C_6$-Alkyl, $C_1$-$C_4$-Alkenyl, mit Halogen, OH, $CO_2H$, $SO_3H$, $OSO_3H$, Methoxy, Ethoxy, $SO_2X$ oder $OCH_2CH_2SO_2X$ substituiertes $C_1$-$C_6$-Alkyl, Cyclohexyl, Cyclopentyl, Benzyl, Phenyl beziehungsweise Naphthyl oder mit $C_1$-$C_4$-Alkyl, $C_1$-$C_4$-Alkoxy, Halogen, $CO_2H$, $SO_3H$, $SO_2X$ oder $CH_2SO_2X$ substituiertes Phenyl, Benzyl beziehungsweise Naphthyl, wobei $R^3$ und $R^4$ zusammen mit dem N-Atom den Rest eines 5- oder 6-gliedrigen Heterocyclus bilden können, wie z.B.

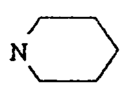 , 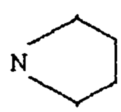 , 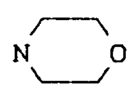 , 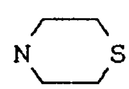 oder

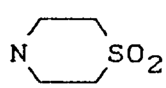 .

**6.** Reaktivfarbstoff gemäß einem der vorhergehenden Ansprüche,
worin

$L^2$ = H oder $SO_3H$

X = $CH=CH_2$ oder $CH_2CH_2OSO_3H$,

R = H oder $(CH_2)_{2-3}$-$SO_2X$,

und D die oben genannte Bedeutung zukommt.

7. Reaktivfarbstoff gemäß wenigstens einem der vorhergehenden Ansprüche entsprechend einer der folgenden Formeln

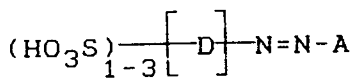

(3)

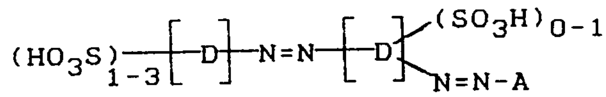

(4)

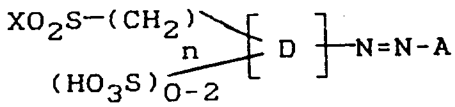

(5)

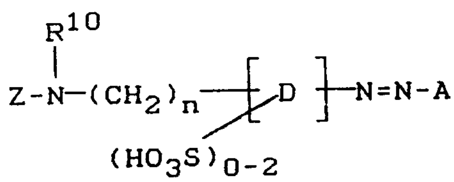

(6)

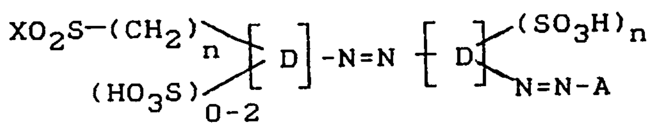

(7)

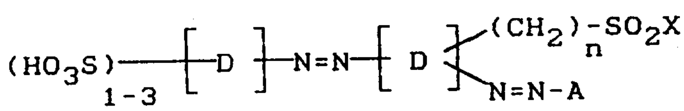

(8)

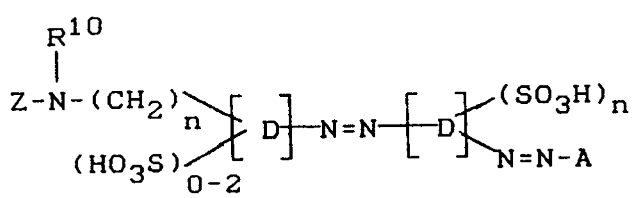

(9)

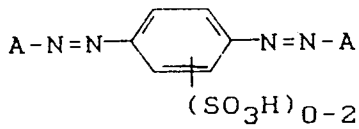

(10)

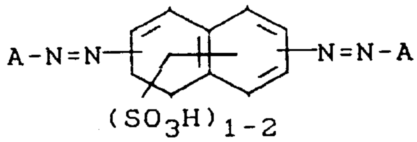

(11)

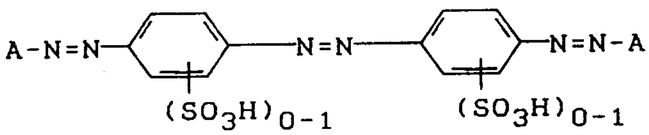

(12)

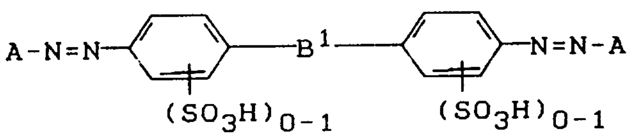

(13)

worin bedeuten:

A

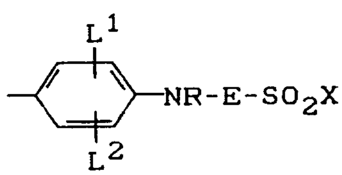

| | |
|---|---|
| n | 0 oder 1 |
| $R^{10}$ | H oder $C_1$-$C_4$-Alkyl, |
| Z | faserreaktiver halogenhaltiger Rest aus der Triazin- oder Pyrimidinreihe sowie |
| D | Phenylen oder Naphthylenrest, der zusätzlich mit Carboxy, Methyl, Ethyl, Methoxy, Ethoxy, Chlor, Brom oder Fluor substituiert sein kann, wobei die Bedeutung für beide Gruppen D in Formel (6), (7) und (8) gleich oder verschieden sein kann, und |
| $B^1$ | direkte Bindung oder $CH_2CH_2$, CH = CH, CO, $SO_2$, NHCONH oder ein Triazinylrest der Struktur |

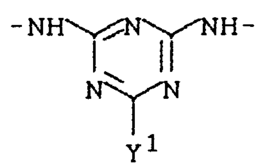

worin $Y^1$ = Cl, F, OH oder $NR^3R^4$,

| | |
|---|---|
| $R^3$, $R^4$ | unabhängig voneinander Wasserstoff, $C_1$-$C_6$-Alkyl, $C_1$-$C_4$-Alkenyl, mit Halogen, OH, $CO_2H$, $SO_3H$, $OSO_3H$, Methoxy, Ethoxy, $SO_2X$ oder $OCH_2CH_2SO_2X$ substituiertes $C_1$-$C_6$-Alkyl, Cyclohexyl, Cyclopentyl, Benzyl, Phenyl beziehungsweise Naphthyl oder mit $C_1$-$C_4$-Alkyl, $C_1$-$C_4$-Alkoxy, Halogen, $CO_2H$, $SO_3H$, $SO_2X$ oder $CH_2SO_2X$ substituiertes Phenyl, Benzyl beziehungsweise Naphthyl, wobei $R^3$ und $R^4$ zusammen mit dem N-Atom den Rest eines 5- oder 6-gliedrigen Heterocyclus bilden können, |

wobei
R, X, $L^1$, $L^2$ und E die in Anspruch 1 angegebene Bedeutung haben.

**8.** Verfahren zur Herstellung eines Reaktivfarbstoffs der Formel

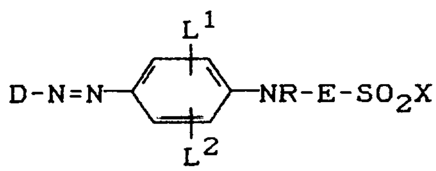

(1)

durch

a) Sulfatierung der Verbindung der Formel

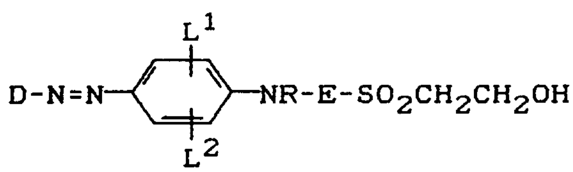

(34)

und gegebenenfalls Überführung unter schwach alkalischen Bedingungen in solche Verbindungen der Formel (I) bei denen

X = Vinyl oder durch

b) Sulfierung von Farbstoffen der Struktur (1a)

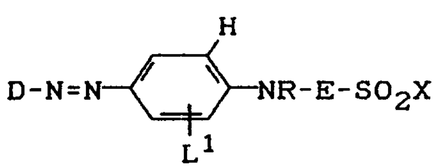

(1a)

zu Verbindungen der Formel

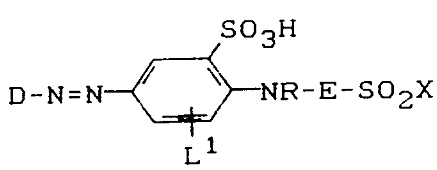

(1b)

oder durch

c) Sulfierung und Sulfatierung von Verbindungen der Struktur (34a)

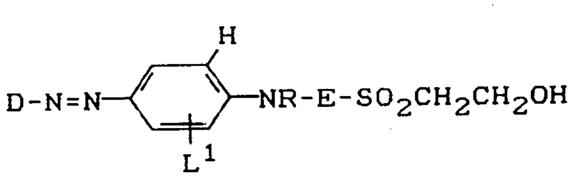

(34a)

wobei für $SO_2X$-Reste in D der Substituent X auch die Bedeutung von $CH_2CH_2OH$ haben kann, zu

faserreaktiven Farbstoffen der Struktur (1b) mit X = $CH_2CH_2OSO_3H$ und gegebenenfalls Überführung dieser Farbstoffe unter schwach alkalischen Bedingungen in solche der Struktur (1b) mit X = Vinyl, oder durch

d) Diazotieren/Tetrazotieren von Diazokomponenten $D\text{-}NH_2$ bzw. Tetrazokomponenten $NH_2\text{-}Q\text{-}NH_2$ und Kuppeln auf Kupplungskomponenten der Struktur (36)

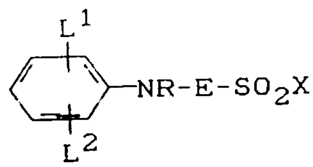

(36)

oder

e) indem man Zwischenprodukte der Struktur (38)

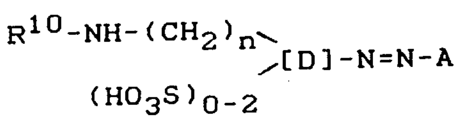

(38)

mit einer heterocyclischen Reaktivkomponente Z-Hal, worin Hal = Cl oder F, in Gegenwart säurebindender Mittel in bekannter Weise kondensiert,

wobei bedeuten

| | |
|---|---|
| D | Rest einer Diazokomponente |
| X | zusammen mit der $SO_2$-Gruppe den Rest einer faserreaktiven Gruppe, |
| $L^1$ | H, $C_1$-$C_4$-Alkyl, $C_1$-$C_4$-Alkoxy, $CO_2H$, $NHCO$-$C_1$-$C_4$-Alkyl,$NHCONH_2$ oder Halogen, |
| $L^2$ | H, $SO_3H$, $C_1$-$C_4$-Alkyl oder $C_1$-$C_4$-Alkoxy, |
| R | H, $C_1$-$C_4$-Alkyl, $CH_2CO_2H$, $CH_2CH_2CO_2H$, $CH_2CH_2SO_3H$, $CH_2CH_2OH$, $CH_2CH_2OSO_3H$ oder $-E\text{-}SO_2X$, |
| E | $-(CH_2\text{-}CH_2\text{-}O)_i\text{-}(CH_2)_r-$, wobei i = 0 oder 1 und r = 2 oder 3, |
| Q | einen bivalenten aromatischen oder heteroaromatischen Rest, |
| A | 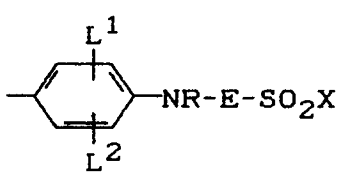 |
| $R^{10}$ | H oder $C_1$-$C_4$-Alkyl, |

wobei mehrmals auftretende Substituenten gleicher Bezeichnung eine von einander unabhängige Bedeutung haben und

wobei der Farbstoff wenigstens eine wasserlöslich machende Gruppe aufweist.

**9.** Verfahren zur Herstellung eines Reaktivfarbstoffes der Formel

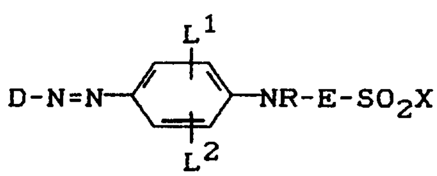

durch

a) Diazotieren der Zwischenprodukte der Struktur (39)

$NH_2$-Q-N=N-A (39)

und kuppeln auf Kupplungskomponenten der Struktur

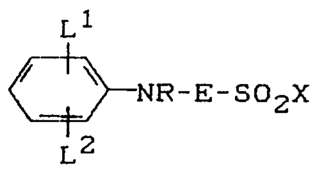

(36)

oder durch

b) Kondensation von zwei Äquivalenten der Verbindung

$R^{10}$-NH-Q-N=N-A (40)

mit Kohlensäurederivaten, Oxalylchlorid, Terephthaloylchlorid oder mit Triazinen der Struktur

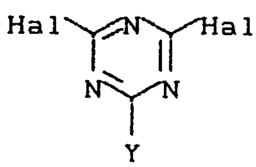

(41)

worin Hal = Cl oder F und
Y die bereits oben genannte Bedeutung zukommt,
oder aber mit Triazinen der Struktur (42)

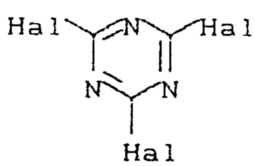

(42)

wobei bedeuten

D =

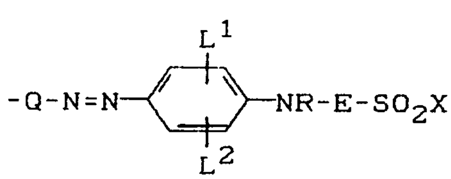

| | |
|---|---|
| X | zusammen mit der $SO_2$-Gruppe den Rest einer faserreaktiven Gruppe, |
| $L^1$ | H, $C_1$-$C_4$-Alkyl, $C_1$-$C_4$-Alkoxy, $CO_2H$, NHCO-$C_1$-$C_4$-Alkyl,$NHCONH_2$ oder Halogen, |
| $L^2$ | H, $SO_3H$, $C_1$-$C_4$-Alkyl oder $C_1$-$C_4$-Alkoxy, |
| R | H, $C_1$-$C_4$-Alkyl, $CH_2CO_2H$, $CH_2CH_2CO_2H$, $CH_2CH_2SO_3H$, $CH_2CH_2OH$, $CH_2CH_2OSO_3H$ oder -E-$SO_2$X, |
| E | $-(CH_2-CH_2-O)_i-(CH_2)_r-$, wobei i = 0 oder 1 und r = 2 oder 3, |

Q einen bivalenten aromatischen oder heteroaromatischen Rest

A

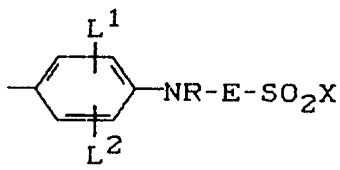

$R^{10}$ H oder $C_1$-$C_4$-Alkyl,

wobei mehrmals auftretende Substituenten gleicher Bezeichnung eine von einander unabhängige Bedeutung haben und

wobei der Farbstoff wenigstens eine wasserlöslich machende Gruppe aufweist.

**10.** Verfahren zur Herstellung von Trisazo/azoxyfarbstoffen durch Zusammenreduktion von Nitroverbindungen der Formel

$O_2N$-Q-N=N-A

mittels eines schonenden Reduktionsmittels, wobei bedeuten

A =

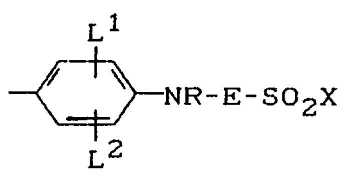

Q = bivalenter aromatischer oder heteroaromatischer Rest

X zusammen mit der $SO_2$-Gruppe den Rest einer faserreaktiven Gruppe,

$L^1$ H, $C_1$-$C_4$-Alkyl, $C_1$-$C_4$-Alkoxy, $CO_2H$, NHCO-$C_1$-$C_4$-Alkyl,$NHCONH_2$ oder Halogen,

$L^2$ H, $SO_3H$, $C_1$-$C_4$-Alkyl oder $C_1$-$C_4$-Alkoxy,

R H, $C_1$-$C_4$-Alkyl, $CH_2CO_2H$, $CH_2CH_2CO_2H$, $CH_2CH_2SO_3H$, $CH_2CH_2OH$, $CH_2CH_2OSO_3H$ oder -E-$SO_2$X,

E $-(CH_2-CH_2-O)_i-(CH_2)_r-$, wobei i = 0 oder 1 und r = 2 oder 3.

**11.** Verbindungen der Formel

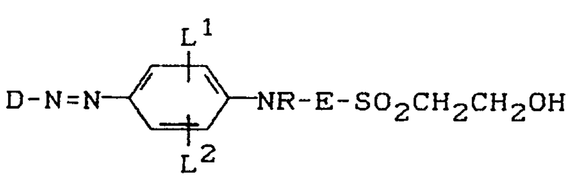

(34)

worin die Gruppen die in Anspruch 1 angegebene Bedeutung haben.

**12.** Verfahren zum Färben und Bedrucken von hydroxyl-und amidgruppenhaltigen Materialien mit einem Reaktivfarbstoff, wobei wenigstens ein Reaktivfarbstoff gemäß Anspruch 1 verwendet wird.

**13.** Textilien, die Fasern enthalten, welche mit einem Reaktivfarbstoff gemäß Anspruch 1 gefärbt worden sind.

Europäisches Patentamt

# EUROPÄISCHER RECHERCHENBERICHT

Nummer der Anmeldung
EP 94 10 3777

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | GB-A-779 781 (FARBWERKE HOECHST AG. VORMALS MEISTER LUCIUS & BRÜNING)<br>* Seite 1, Zeile 32 - Zeile 51; Anspruch 6; Beispiel 11 * | 1-3,7,8, 12,13 | C09B62/507<br>C09B62/08<br>C09B62/44<br>C09B29/08<br>C09B67/00<br>//D06P1/38 |
| Y | * Seite 1, Zeile 58 - Zeile 64; Ansprüche 7,8 *<br>--- | 4-6,9-11 | |
| D,Y | EP-A-0 520 241 (BAYER AG.)<br>* Seite 12, Zeile 1 - Zeile 6; Ansprüche 1,6,7; Beispiele 21,80,91,92 *<br>--- | 4-6,9-11 | |
| Y | EP-A-0 043 439 (BAYER AG.)<br>* Seite 4, Zeile 5 - Seite 5, Zeile 2; Anspruch 9 *<br>----- | 10 | |

RECHERCHIERTE SACHGEBIETE (Int.Cl.5)

C09B

Der vorliegende Recherchenbericht wurde für alle Patentansprüche erstellt

| Recherchenort | Abschlußdatum der Recherche | Prüfer |
|---|---|---|
| DEN HAAG | 4. Juli 1994 | Ginoux, C |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)